# EUROPÄISCHE PATENTSCHRIFT

(11) **EP 3 925 454 B1**
(45) Veröffentlichungstag und Bekanntmachung des Hinweises auf die Patenterteilung: **15.01.2025**
(21) Anmeldenummer: 21179409.4
(22) Anmeldetag: 15.06.2021
(51) Int. Cl.: A23N 17/02, A01K 5/00, B02C 13/00, A23K 40/10

(54) **FUTTERMITTELVERARBEITUNGSANLAGE UND VERFAHREN ZUR TROCKENFUTTER-HERSTELLUNG**
FEED PROCESSING SYSTEM AND METHOD FOR DRY FEED PRODUCTION
INSTALLATION DE TRAITEMENT DU FOURRAGE ET PROCÉDÉ DE FABRICATION DE FOURRAGE SEC

(30) Priorität: 17.06.2020 DE 102020116017
(43) Veröffentlichungstag der Anmeldung: 22.12.2021
(73) Patentinhaber: Tietjen Verfahrenstechnik GmbH, 25485 Hemdingen (DE)
(72) Erfinder: KASCH, Achim, 23823 Seedorf (DE)
(74) Vertreter: Eisenführ Speiser

(56) Entgegenhaltungen:
- EP-A1- 2 708 643
- DE-A1- 102009 032 931
- US-A- 4 759 943
- LYU F ET AL: "Size reduction in feed technology and methods for determining, expressing and predicting particle size: A review", ANIMAL FEED SCIENCE AND TECHNOLOGY, ELSEVIER, AMSTERDAM, NL, vol. 261, 26 November 2019 (2019-11-26), XP086049275, ISSN: 0377-8401, [retrieved on 20191126], DOI: 10.1016/J.ANIFEEDSCI.2019.114347

## Beschreibung

Die Erfindung betrifft eine Futtermittelverarbeitungsanlage zur Herstellung eines Trockenfutter-Produkts aus einem Trockenfutter-Rohgemisch, mit einem Zufuhrabschnitt, in dem das Rohgemisch zugeführt wird, mit einer mit dem Zufuhrabschnitt verbundenen Hammermühle zum Vermahlen mindestens eines Teils des zugeführten Rohgemischs, und mit einem mit der Hammermühle verbundenen Austragsabschnitt, in dem das Produkt ausgetragen wird. Die Erfindung betrifft weiterhin ein Verfahren zur Herstellung eines Trockenfutter-Produkts aus einem Trockenfutter-Rohgemisch, insbesondere mit Hilfe einer vorgenannten Anlage, wobei das Rohgemisch in einem Zufuhrabschnitt zugeführt wird, mindestens ein Teil des zugeführten Rohgemischs mittels einer mit dem Zufuhrabschnitt verbundenen Hammermühle vermahlen wird, und das Produkt mittels eines mit der Hammermühle verbundenen Austragsabschnitts ausgetragen wird.

Derartige Anlagen und Verfahren sind aus dem Stand der Technik bekannt. Derartige Anlagen und Verfahren sind beispielsweise aus der US 4 759 943 A und der DE 10 2009 032931 A1 bekannt geworden.

Aufgabe der Erfindung ist es, Anlagen und Verfahren der eingangs genannten Art zu verbessern.

Diese Aufgabe wird durch die Gegenstände der unabhängigen Ansprüche gelöst.

Die Erfindung umfasst die Erkenntnis, dass insbesondere bei der Verarbeitung bzw. Herstellung eines Trockenfutter-Produkts aus einem Trockenfutter-Rohgemisch die Anforderungen an die Feinheit der Trockenfutter-Partikel des fertigen Trockenfutter-Produkts und an die Leistungsfähigkeit der Anlagen (in t/hr) stetig steigen. Dies gilt in besonderem Maße für Fischfutter in der Fisch- und Meeresfrüchtezucht.

Die Feinheit der Partikel bedeutet in diesem Zusammenhang, dass die Partikel mit einer bestimmten Feinheit einen bestimmten maximalen Durchmesser aufweisen. Ein Trockenfutter mit einer Feinheit von 400 Mikrometer bedeutet somit, dass die Trockenfutter-Partikel einen maximalen Durchmesser von 400 Mikrometer aufweisen.

Die vorgenannten gestiegenen Anforderungen an die Feinheit des Trockenfutters manifestieren sich insbesondere darin, dass das fertige Trockenfutter-Produkt einen möglichst hohen Prozentsatz einer gewünschten Feinheit aufweisen soll. Die Feinheit ist im Zusammenhang mit der Pellets-Größe zu setzen. In einem Pellet soll jeder Inhaltsstoff der Rezeptur mit einem gewünschten Prozentsatz enthalten sein. Diese hohen Anforderungen finden sich insbesondere in der Zucht von Fisch und Meeresfrüchten. Denn es hat sich gezeigt, dass es für die Fischzucht optimal ist, wenn in dem trockenen Fischfutter-Produkt mindestens 95 % der Partikel eine Feinheit unterhalb von 450 Mikrometer aufweisen. Bei Trockenfutter-Produkten für Meeresfrüchte hat es sich sogar erwiesen, dass es für die Zucht von Meeresfrüchten von Vorteil ist, wenn mindestens 95 % der Partikel eine Feinheit von unterhalb von 250 Mikrometer aufweisen.

Die Erfindung hat nun weiterhin in dem vorgenannten Zusammenhang erkannt, dass es bei der Herstellung von Fisch- bzw. Meeresfrüchte-Trockenfutter, insbesondere bei der Herstellung von Fisch- bzw. Meeresfrüchte-Trockenfutter mit Feinheiten unterhalb von 250 Mikrometer zu Problemen kommt. Denn die heutigen Fisch- und Meeresfruchtzuchtbetriebe fordern neben den vorgenannten Feinheiten vor allen Dingen stark fett- und/oder proteinhaltige Futtermittel, um den Zuchterfolg der Fisch- bzw. der Meeresfrüchtezucht zu optimieren. Zur Herstellung derartig fett- und/oder proteinhaltiger Futtermittel ist es jedoch zwingend erforderlich, dass bereits das Trockenfutter-Rohgemisch, aus dem dann das Trockenfutter-Produkt gemäß der gewünschten Spezifikation hergestellt werden soll, bereits entsprechend fett- und/oder proteinhaltig ist. In diesem Zusammenhang hat die Erfindung nun erkannt, dass mit den bekannten Futtermittelverarbeitungsanlagen und Herstellungsverfahren bei derartigen fett- und/oder proteinhaltigen Trockenfutter-Rohgemischen eine Feinheit von weniger als 250 Mikrometer bei mindestens 95 % der Teilchen nicht erreichbar ist. Denn die zur Vermahlung des Trockenfutter-Rohgemischs zur Verfügung stehenden Hammer-, Prallsichter-, Spalt- oder Stiftmühlen sind alleine entweder nicht in der Lage Feinheiten von weniger als 250 Mikrometer bei mindestens 95 % des derartige Mühlen verlassenen Zwischenprodukts darzustellen oder eine derartige Spezifikation ist nur nach einem unwirtschaftlich hohen Einsatz an Energie, gemessen in Kilowatt pro Stunde pro Tonne, möglich. Weiterhin ist auch die Leistung per Maschine begrenzt.

In diesem Zusammenhang hat die Erfindung weiterhin erkannt, dass auch bei geringeren Feinheitsanforderungen, beispielsweise, wenn mindestens 95 % der Partikel nur eine Feinheit von weniger als 450 Mikrometer aufweisen müssen, die bekannten vorgenannten Mühlen nicht geeignet sind, wenn es sich bei den Partikeln um fett- und/oder proteinhaltiges Fischfutter-Rohgemisch handelt. Denn die bekannten Futtermittelverarbeitungsanlagen zur Herstellung derartigen Fischfutters verwenden im Nachgang zu einer der vorgenannten Mühlen Plan- oder Rotationssiebmaschinen. Derartige bewegliche Siebe von Plan- bzw. Rotationssiebmaschinen verkleben jedoch aufgrund der fett- und/oder proteinhaltigen Trockenfutter-Rohgemische unterhalb von 450 Mikrometer, so dass die oben genannten, heute von den Fischzuchtbetrieben geforderten Feinheiten von unterhalb 250 Mikrometer mit Hilfe einer Vermahlung mit einer der vorgenannten Mühlen und einer anschließenden Sichtung mittels der bekannten beweglichen Siebe von Plan- oder Rotationssiebmaschinen nicht darstellbar ist. Denn durch das von den fett- und/oder proteinhaltigen Rohgemisch-Partikeln verursachte Verkleben der vorgenannten Plan- oder Rotationssiebmaschinen blockiert schließlich die gesamte derart aufgebaute Futtermittelverarbeitungsanlage bzw. der gesamte Herstellungsprozess.

Ein Vorteil der Erfindung liegt insbesondere darin, dass es insbesondere aufgrund der erfindungsgemäßen Integration eines Windsichters zum Sichten von Partikeln mit einer unterhalb einer vorbestimmten Obergrenze liegenden Feinheit in eine Futtermittelverarbeitungsanlage zur Herstellung eines Trockenfutter-Produkts bzw. in ein Verfahren zur Herstellung eines Trockenfutter-Produkts aus einem Trockenfutter-Rohgemisch möglich ist, die von der heutigen Fisch- und Meeresfrüchtezuchtindustrie geforderten Feinheiten des Trockenfutter-Produkts von unterhalb von 250 Mikrometer bei mindestens 95 % der Partikel in wirtschaftlicher Form darzustellen, d.h. in einer Form darzustellen, bei der die Kosten für die bei der Herstellung eingesetzten Energiemenge, gemessen in Kilowatt pro Stunde pro Tonne Trockenfutter-Produkt nicht den Verkaufspreis des Trockenfutter-Produkts übersteigen.

Überraschenderweise hat die Erfindung noch den weiteren Vorteil, dass auch bei geringeren Anforderungen an die Feinheit, d.h. auch bei Feinheiten, bei denen 95 % der Partikel des Trockenfutterprodukts nur Feinheiten zwischen 250 und 600 Mikrometer aufweisen sollen, eine energieeffizientere Herstellung derartigen Trockenfutter-Produkts möglich ist. Denn durch den erfindungsgemäßen Windsichter kommt es auch bei Feinheiten bei mehr als 95 % der Partikel zwischen 250 Mikrometer und 400-500 Mikrometer zu einer Effizienzsteigerung und zu einer Entlastung der nachgeschalteten Hammermühle. Denn die Hammermühle der erfindungsgemäßen Futtermittelverarbeitungsanlage bzw. des erfindungsgemäßen Verfahrens zur Trockenfutter-Herstellung muss aufgrund des vorgeschalteten Sichtvorgangs durch den erfindungsgemäßen Windsichter weniger Material bei reduziertem spezifischen Energiebedarf zerkleinern. Somit reduziert sich Dank der Erfindung für die Vermahlung derselben Materialmenge die Verweildauer in der Hammermühle gegenüber der Verweildauer, die im Stand der Technik für dieselbe Materialmenge nötig war. Darüber hinaus erhöht sich durch den erfindungsgemäß in die Anlage bzw. das Verfahren integrierten Windsichter auch die Produktqualität durch eine schärfere Oberkornbegrenzung.

Durch die durch den Windsichter hervorgerufene Effizienzsteigerung im Sichtvorgang wird darüber hinaus auch die Umwandlung von mechanischer Energie der Hammermühle in Wärme und somit auch die Umwandlung von der eingesetzten elektrischen Energie in Wärme reduziert, so dass die Hammermühle durch den Windsichter entlastet wird. Diese Entlastung der Hammermühle pro Menge Material hat wiederum mehrere weitere Vorteile zur Folge. Zum einen sind bei der Hammermühle somit geringere Verschleißkosten zu besorgen, insbesondere bei hohen Volumina im Bereich von 15 Tonnen pro Stunde mit einer Produktqualität von 95 % der Partikel mit einer Feinheit von unterhalb 600 Mikrometer. Denn im Vergleich dazu haben Prallsichter-, Spalt- oder Stiftmühlen einen deutlich höheren Verschleiß.

Besonders vorteilhaft wirkt sich der vorstehend beschriebene geringere Wärmeeintrag in das Trockenfutter-Produkt durch dadurch verbesserte Produkteigenschaften aus. Denn in dem Stand der Technik wurden durch die hohen Wärmeeinträge durch die langen Vermahlungsprozesse die Produkteigenschaften negativ beeinflusst. So wurden im Stand der Technik durch die langen Vermahlungsprozesse der vorgenannten bekannten Mühlen die Produkteigenschaft insoweit negativ beeinflusst, dass das Potential für die nachfolgende Verarbeitung des Trockenfutter-Produkts in nachfolgenden Prozessstufen, wie beispielsweise das Potential für nachfolgende Koch- und Bindungsprozesse, negativ beeinflusst bzw. teilweise sogar zerstört wurde. All dies wird durch die vorliegende Erfindung erfolgreich vermieden. Die Produkteigenschaften des durch die erfindungsgemäße Futtermittelverarbeitungsanlage bzw. des erfindungsgemäßen Verfahren hergestellte Produkt bleiben somit durch die erfindungsgemäß kürzeren Vermahlungszeiten in der Hammermühle auch bei empfindlichen fett- und/oder proteinhaltigen Rohgemisch-Rezeptbestandteilen für nachfolgende Koch- und Bindungsprozesse erhalten. Somit können die erfindungsgemäß hergestellten Produkte beispielsweise in nachfolgenden Extrusionsprozessen unter Erhalt der wertvollen Ernährungseigenschaften für Fische bzw. Meeresfrüchte verarbeitet werden. Schließlich werden derartige nachfolgend Extrusionsprozesse für das mittels der vorliegenden Erfindung hergestellte Trockenfutter-Produkt auch durch das definiert gesichtete Kornspektrum des erfindungsgemäß hergestellten Trockenfutter-Produkts erleichtert bzw. verbessert.

Die Erfindung zeichnet sich dadurch aus, dass der Windsichter derart zwischen dem Zufuhrabschnitt und dem Austragsabschnitt in die Anlage eingebunden ist, dass das Rohgemisch vor dem Vermahlen durch die Hammermühle dem Windsichter zuführbar ist. Bevorzugt geschieht dies dadurch, dass der Windsichter stromabwärts des Zufuhrabschnitts und stromaufwärts der Hammermühle in die Anlage eingebunden ist. Die Vorteile dieser Ausführungsform liegen insbesondere darin, dass Bestandteile bzw. Partikel des Trockenfutter-Rohgemischs, die bereits eine unterhalb der vorbestimmten Obergrenze liegende Feinheit, beispielsweise bereits eine Feinheit von unterhalb von 250 Mikrometer aufweisen, von dem erfindungsgemäßen Windsichter vor Eintritt in die Mühle erfindungsgemäß gesichtet und somit an der Hammermühle vorbeigeführt werden können, um deren Effizienz zu verbessern. Mit anderen Worten wird bei dieser Ausführungsform eine Vorsichtung des Trockenfutter-Rohgemischs vor der Vermahlung durch die Hammermühle vorgenommen und ein Bypass der Hammermühle für Partikel mit einer unterhalb der vorbestimmten Obergrenze liegenden Feinheit ermöglicht, was zu einer erheblichen Effizienzsteigerung der Hammermühle führt. Denn die Hammermühle muss dann nur noch diejenigen Partikel des Trockenfutter-Rohgemischs vermahlen, die einen oberhalb der vorbestimmten Obergrenze liegenden Wert der Feinheit aufweisen. Dies reduziert erneut die Verweildauer der zu vermahlenden Partikel in der Hammermühle und somit den Wärmeeintrag in diese Partikel, so dass sich die Qualität des von der Hammermühle abgegebenen Zwischenprodukts gegenüber dem Stand der Technik aufgrund des erfindungsgemäß geringeren Wärmeeintrags in das Zwischenprodukt gegenüber dem Stand der Technik erhöht.

Eine Ausführungsform der Erfindung zeichnet sich dadurch aus, dass der Windsichter derart in die Anlage eingebunden ist, dass ein durch die Vermahlung durch die Hammermühle entstandenes Zwischenprodukt dem Windsichter zuführbar ist, bevorzugt dadurch, dass der Windsichter stromabwärts von der Hammermühle in die Anlage eingebunden ist. Die Vorteile dieser Ausführungsform liegen insbesondere darin, dass - je nach Rezepturzusammensetzung und Feinheitsanforderung an die vorbestimmte Obergrenze der Feinheit - sichergestellt werden kann, dass keine zu großen Partikel in dem durch die Vermahlung durch die Hammermühle entstandenen Zwischenprodukt den Austragsabschnitt der Anlage, insbesondere beispielswiese einen Hauptmischer der nachfolgend beschriebenen Art, erreichen. Somit wird insgesamt die Produktqualität des die Hammermühle verlassenen Zwischenprodukts durch eine schärfere Oberkornbegrenzung erhöht.

Eine Ausführungsform der Erfindung zeichnet sich dadurch aus, dass der Windsichter derart in die Anlage eingebunden ist, dass Partikel mit einer unterhalb der vorbestimmten Obergrenze liegenden Feinheit dem Austragsabschnitt unter Umgehung der Hammermühle mittels eines ersten Windsichter-Ausgangs zuführbar sind, während Partikel mit einer oberhalb der vorbestimmten Obergrenze liegenden Feinheit der Hammermühle mittels eines zweiten Windsichter-Ausgangs zuführbar sind, wobei der erste Windsichter-Ausgang mit dem Austragsabschnitt verbunden ist und der zweite Windsichter-Ausgang mit der Hammermühle verbunden ist, wobei der Windsichter bevorzugt dadurch in die Anlage eingebunden ist, dass der Windsichter stromaufwärts von der Hammermühle liegt und bevorzugt einen mit dem Zufuhrabschnitt verbundenen Windsichter-Eingang zum Empfangen von Rohgemisch aufweist. Diese Ausführungsform weist insbesondere die Vorteile der beiden vorstehenden Ausführungsformen auf. Mit anderen Worten liefert diese Ausführungsform eine konkrete Umsetzung zur Realisierung einer Kombination der Vorteile beider vorgenannten Ausführungsformen. Somit ist es bei dieser Ausführungsform zum einen vorteilhaft möglich im Rahmen der Vorsichtung bereits vor der Vermahlung durch die Hammermühle diejenigen Bestandteile der Rezeptur des Trockenfutter-Rohgemischs, die bereits eine unterhalb der vorbestimmten Obergrenze liegende Feinheit aufweisen, in der Art eines Bypasses an der Hammermühle vorbei zu führen, um die Effizienz der Hammermühle zu verbessern, während andererseits das von der Hammermühle erzeugte Zwischenprodukt gesichtet wird, so dass keine zu großen Partikel den Austragsabschnitt, beispielweise den nachfolgend beschriebenen Hauptmischer des Austragsabschnittes, erreichen und somit die Produktqualität im Austragsabschnitt durch eine schärfere Oberkornbegrenzung erhöht wird.

Eine Ausführungsform der Erfindung zeichnet sich dadurch aus, dass der Zufuhrabschnitt einen ersten 2-Wege-Verteiler aufweist, wobei der erste 2-Wege-Verteiler einen Eingang, einen ersten Ausgang und einen zweiten Ausgang aufweist, wobei dem Eingang Rohgemisch zuführbar ist, wobei mittels einer Stellvorrichtung eine Abgabe des Rohgemischs aus dem ersten 2-Wege-Verteiler über den ersten Ausgang oder eine Abgabe des Rohgemischs aus dem ersten 2-Wege-Verteiler über den zweiten Ausgang auswählbar ist, wobei der erste Ausgang mit der Hammermühle verbunden ist und der zweite Ausgang mit dem Windsichter verbunden ist. Diese Ausführungsform bietet den Vorteil, dass durch den wie eine Weiche funktionierenden ersten 2-Wege-Verteiler eine Leitung des den Eingang des ersten 2-Wege-Verteilers erreichenden Produktstroms aus Trockenfutter-Rohgemisch in die eine oder andere Richtung ermöglicht wird. Somit kann der den Eingang des ersten 2-Wege-Verteilers erreichende Produktstrom des Trockenfutter-Rohgemischs je nach Vormischung bzw. Rezeptur des Trockenfutter-Rohgemischs und der sich darin befindenden Partikelgrößenverteilung bzw. Partikelfeinheitenverteilung entweder direkt auf die Hammermühle geleitet werden oder zuerst auf den Windsichter geleitet werden. Somit bietet diese Ausführungsform insbesondere den Vorteil, dass in Abhängigkeit von der Rezeptur des Trockenfutter-Rohgemischs und den Feinheitsanforderungen, d.h. insbesondere den Anforderungen an die Feinheit des fertigen Trockenfutter-Produkts, konkret den gewünschten prozentualen Anteil von Partikeln mit einer unterhalb einer vorbestimmten Obergrenze liegenden Feinheit, wahlweise direkt in der Hammermühle vermahlen werden und danach mittels des Windsichters gesichtet werden, oder vorab mittels des Windsichters gesichtet werden und anschließend mit der Hammermühle vermahlen werden. Durch die letztgenannte, so genannte Vorsichtung vor der Vermahlung durch die Hammermühle können Bestandteile des Trockenfutter-Rohgemischs, die bereits die gewünschte unterhalb der vorbestimmten Obergrenze liegende Feinheit aufweisen, wie zuvor beschrieben direkt an den Austragsabschnitt, beispielsweise den Hauptmischer des Austragsabschnitts, weitergeleitet werden, ohne die Kapazität der Hammermühle zu belasten.

Eine Ausführungsform der Erfindung zeichnet sich dadurch aus, dass der Zufuhrabschnitt einen Vormischer aufweist, mittels dessen das Trockenfutter-Rohgemisch durch Mischung von Trockenfutter-Rohmaterial-Bestandteilen herstellbar ist. Die Vorteile dieser Ausführungsform liegen insbesondere darin, dass mit Hilfe eines derartigen Vormischers aus den Trockenfutter-Rohmaterial-Bestandteilen eine homogene Mischung herstellbar ist. Bei dem Vormischer kann es sich insbesondere um einen horizontalen Mischer handeln, aber auch andere Vormischerarten können eine homogene Mischung herstellen. Eine Mischung der Trockenfutter-Rohmaterial-Bestandteile durch den Vormischer, insbesondere eine homogene Mischung, ermöglicht vorteilhaft eine kontinuierliche, effiziente Vermahlung in der nachfolgenden Hammermühle. Denn die Erfindung hat erkannt, dass einzelne Bestandteile der Rezeptur des Rohgemischs, sollten sie einzeln bzw. ungemischt von der Hammermühle vermahlen werden, Probleme im Vermahlungsprozess bis hin zur Blockade der Hammermühle verursachen können. In jedem Fall ist eine Vermahlung homogener Gemische durch die Hammermühle energieeffizienter als die Vermahlung der einzelnen Bestandteile des Rohgemischs nacheinander, beispielsweise durch in Serie geschalteter Hammermühlen bzw. durch Einzelvermahlung der Bestandteile des Rohgemischs hintereinander auf derselben Mühle.

Eine Ausführungsform der Erfindung zeichnet sich dadurch aus, dass der Vormischer, bevorzugt über einen ersten 2-Wege-Verteiler der vorgenannten Art, mit der Hammermühle und dem Windsichter verbunden ist. Auf diese Weise lässt sich die Anwendung des Vormischers an die Hammermühle besonders einfach realisieren. Bevorzugt ist dabei die Hammermühle vertikal unterhalb des Vormischers bzw. weiter bevorzugt vertikal unterhalb des ersten 2-Wege-Verteilers angeordnet, so dass sich der Volumenstrom des Rohgemischs von dem Vormischer durch den 2-Wege-Verteiler in Richtung auf die Hammermühle alleine durch Schwerkraft getrieben bewegen kann.

Eine Ausführungsform der Erfindung zeichnet sich dadurch aus, dass mittels des, bevorzugt als horizontaler Mischer ausgestalteten, Vormischers ein homogenes Trockenfutter-Rohgemisch herstellbar ist. Eine homogene Mischung ermöglicht vorteilhaft eine kontinuierliche, effiziente Vermahlung in der nachfolgenden Hammermühle. Denn die Erfindung hat erkannt, dass einzelne Bestandteile der Rezeptur des Rohgemischs, sollten sie einzeln bzw. ungemischt von der Hammermühle vermahlen werden, Probleme im Vermahlungsprozess bis hin zur Blockade der Hammermühle verursachen können. In jedem Fall ist eine Vermahlung homogener Gemische durch die Hammermühle energieeffizienter als die Vermahlung der einzelnen Bestandteile des Rohgemischs nacheinander, beispielsweise durch in Serie geschalteter Hammermühlen.

Eine Ausführungsform der Erfindung zeichnet sich dadurch aus, dass stromabwärts des Zufuhrabschnitts und stromaufwärts des Windsichters eine motorgetriebene Dosierschleuse vorgesehen ist, mittels derer ein von dem Zufuhrabschnitt kommender Volumenstrom des Rohgemischs dosiert dem Windsichter zuförderbar ist, wobei die Dosierschleuse bevorzugt zugleich eine Entkopplung und/oder einen Übergang von einer von dem Zufuhrabschnitt zu der Dosierschleuse mechanisch erfolgenden Förderung des Volumenstroms des Rohgemischs zu einer von der Dosierschleuse zu dem Windsichter pneumatisch erfolgenden Förderung des Volumenstroms des Rohgemischs darstellt. Durch die vorgenannte Entkopplung wird vorteilhaft erreicht, dass der Produktvolumenstrom von der mechanischen Förderung in die pneumatische Förderung zum Transport zu dem Windsichter übergeben werden kann, ohne dass Falschluft aus der mechanischen Förderung angesaugt wird. Somit wird vorteilhaft eine stabile, gleichmäßige pneumatische Förderung zum Windsichter sichergestellt.

Eine Ausführungsform der Erfindung zeichnet sich dadurch aus, dass stromabwärts des Zufuhrabschnitts und stromaufwärts der Hammermühle ein als Pufferspeicher wirkender Vorbehälter vorgesehen ist, um vom Zufuhrabschnitt erhaltenes Rohgemisch vor einer Abgabe an die Hammermühle zwischenzuspeichern. Durch die Speicherung mit Hilfe eines derartigen Vorbehälters wird vorteilhaft erreicht, dass ein gleichmäßiger, stetiger Transport des Rohgemischs zur Hammermühle sichergestellt ist. Denn der vorgenannte Vorbehälter stellt eine ständige Produktvorlage dar und stellt damit vorteilhaft sicher, dass stetig gefördert und in der Folge auch stetig mit Hilfe der Hammermühle vermahlen werden kann und somit keine Schwankungen in der Auslastung der Hammermühle auftreten können. Es wird somit aufgrund dieser Ausführungsform eine maximale Vermahlungsleistung der Hammermühle, ein gleichmäßiger Verschleiß der Hammermühle, geringe Vibrationen und Energieeinsparung in dem Vermahlungssystem der Hammermühle erreicht.

Eine Ausführungsform der Erfindung zeichnet sich dadurch aus, dass stromabwärts des Zufuhrabschnitts und stromaufwärts der Hammermühle, bevorzugt direkt vor der Hammermühle, eine mindestens eine motorgetriebene Förderschnecke aufweisende Speisung vorgesehen ist, um eine gleichmäßige Auslastung der Hammermühle zu gewährleisten, bevorzugt in dem eine Auslastung eines Antriebsmotors der Hammermühle als Vorgabe für die Leistung mindestens einen der motorgetriebenen Förderschnecke dient. Mit Hilfe einer derartigen Speisung lässt sich insbesondere das Mahlgut vorteilhaft auf die gesamt Breite des Vermahlungssystems der Hammermühle verteilen. Vorteilhaft wird eine gleichmäßige Förderung des Mahlguts zur Hammermühle gewährleistet. Bei der bevorzugt von der Auslastung der Hammermühle lastabhängigen Speisung wird eine gleichmäßige Förderung sichergestellt, die vorteilhaft dafür sorgt, dass stetig vermahlen werden kann und in der Mühlenauslastung der Hammermühle keine Schwankungen auftreten. Denn durch die Verwendung der Auslastung des Mühlenmotors der Hammermühle als Vorgabe für die Leistung der motorbetriebenen Förderschnecke der Speisung wird eine Überfüllung oder ein Leerlaufen der Hammermühle erfolgreich vorteilhaft verhindert.

Eine Ausführungsform der Erfindung zeichnet sich dadurch aus, dass die Speisung eine Doppel-Magnet-Kaskade und/oder eine Schwerteil-Auslese aufweist, um magnetische und nicht magnetische Fremdkörper, das heißt im Trockenfutter-Produkt unerwünschte Bestandteile des Volumenstroms, vor einem Eintritt des Volumenstroms in die Hammermühle auszusortieren. Durch das Aussortieren von Fremdkörpern wird die nachfolgende Hammermühle erfolgreich vor Beschädigungen durch derartige Fremdkörper geschützt.

Eine Ausführungsform der Erfindung zeichnet sich dadurch aus, dass stromabwärts, bevorzugt vertikal unterhalb, der Hammermühle ein Nachbehälter mit einer mittels eines Motors angetriebenen Austragsschnecke vorgesehen ist, um das von der Hammermühle vermahlene Zwischenprodukt aufzufangen und aus dem Nachbehälter auszutragen. Mit Hilfe des bevorzugt luftdicht gestalteten Nachbehälters lassen sich vorteilhaft Produktstauungen, die sogenannte Brückenbildung, verhindern. Bevorzugt wird das Volumen des Nachbehälters soweit möglich minimiert, und um den Platzbedarf der Kombination aus Hammermühle und Nachbehälter mit Austragsschnecke zu minimieren.

Eine Ausführungsform der Erfindung zeichnet sich dadurch aus, dass mit dem Nachbehälter ein mittels eines Motors angetriebener Ventilator verbunden ist, mittels dessen Prozessluft aus der Hammermühle und dem Nachbehälter absaugbar ist. Ein derartiger Ventilator erzeugt vorteilhaft die notwendige Aspirationsluft für das aus Hammermühle, Nachbehälter und Austragsschnecke bestehende Vermahlungssystem und sorgt insbesondere für das richtige Volumen und die richtige Saugkraft im Vermahlungssystem, um ein optimales Vermahlungsergebnis durch das Vermahlungssystem zu erzielen. Somit kann ein optimal mit der Prozessluft zur Hammermühle transportiertes, in der Hammermühle zerkleinertes und danach wieder in den Nachbehälter abgeführtes Produkt dargestellt werden, wobei der richtige Unterdruck durch den vorgenannten Ventilator vorteilhaft auch einen Staubaustritt aus dem Vermahlungssystem verhindert. Insgesamt wird durch den vorgenannten Ventilator eine energieeffiziente und maximale Vermahlungsleistung des Vermahlungssystems erzielt.

Eine Ausführungsform der Erfindung zeichnet sich dadurch aus, dass zwischen dem Nachbehälter und dem Ventilator ein Filter vorgesehen ist, mittels dessen vorteilhaft Produktstaub aus der von dem Ventilator abgesaugten Prozessluft herausfilterbar ist.

Eine Ausführungsform der Erfindung zeichnet sich dadurch aus, dass stromabwärts von der Hammermühle eine mittels eines Motors angetriebene Austragsschleuse vorgesehen ist, um eine mechanische Förderung eines von der Hammermühle abgegebenen Zwischenprodukts abzuschließen und das Zwischenprodukt an eine weitere Verarbeitung innerhalb der Anlage abzugeben und gleichzeitig vorteilhaft einen Eintritt von Falschluft in die Hammermühle zu verhindern. Mit Hilfe der Austragsschleuse wird insbesondere weiter vorteilhaft verhindert, dass durch die Aspiration des vorstehend genannten Ventilators Falschluft über einen Ausgang der Austragsschnecke des vorgenannten Nachbehälters angesaugt wird und somit der Vermahlungsprozess durch die Hammermühle negativ beeinflusst werden würde. Insgesamt stellt somit die Austragsschleuse eine kontrollierte Luftmengen- und Luftdrucksituation im vorgenannten Nachbehälter bzw. im vorgenannten Filter sicher, insbesondere auch eine ausschließliche Ansaugung der Prozessluft durch die Hammermühle. Insgesamt wird eine effiziente Vermahlung durch die Hammermühle und eine Energieeinsparung für die Aspiration durch den vorgenannten Ventilator sichergestellt.

Eine Ausführungsform der Erfindung zeichnet sich dadurch aus, dass stromabwärts der Hammermühle und stromaufwärts des Austragsabschnitts ein zweiter 2-Wege-Verteiler vorgesehen ist, wobei der zweite 2-Wege-Verteiler einen Eingang, einen ersten Ausgang und einen zweiten Ausgang aufweist, wobei der Eingang mit der Hammermühle verbunden ist und dem Eingang durch die Vermahlung durch die Hammermühle entstandenes Zwischenprodukt zuführbar ist, wobei eine Abgabe des Zwischenprodukts aus dem zweiten 2-Wege-Verteiler über den ersten oder über den zweiten Ausgang erfolgen kann, wobei der gewünschte Ausgang mittels einer Stellvorrichtung wählbar ist, wobei der erste Ausgang mit dem Windsichter verbunden ist, während der zweite Ausgang mit dem Austragsabschnitt verbunden ist. Diese Ausführungsform bietet den Vorteil, dass durch den wie eine Weiche funktionierenden zweiten 2-Wege-Verteiler eine Leitung des den Eingang des zweiten 2-Wege-Verteilers erreichenden Volumenstroms des von der Hammermühle abgegebenen Zwischenprodukts in die eine oder andere Richtung ermöglicht wird. Somit kann durch den 2-Wege-Verteiler das Zwischenprodukt zum einen dem Windsichter zugeführt werden, und zum anderen dem Austragsabschnitt der Futtermittelverarbeitungsanlage zugeführt werden. Die besonderen Vorteile dieser Ausführungsform liegen insbesondere darin, dass durch den zweiten 2-Wege-Verteiler das Zwischenprodukt je nach Rezeptur und Feinheitsanforderung an das vom Austragsabschnitt abzugebende Trockenfutter-Rohgemisch direkt dem Austragsabschnitt zugeführt werden kann, wenn das Zwischenprodukt bereits die Anforderungen erfüllt oder dem Windsichter zugeführt werden kann, wenn eine Sichtung durch den Windsichter erforderlich ist. Durch letzteres kann sichergestellt werden, dass nur Zwischenprodukt-Partikel mit einer unterhalb der vorbestimmten Obergrenze liegenden Feinheit den Austragsabschnitt erreichen, während Zwischenprodukt-Partikel mit einer oberhalb der vorbestimmten Obergrenze liegenden Feinheit erneut dem Vermahlungsprozess zugeführt werden. Andererseits, wenn das Vermahlungsspektrum der Hammermühle ausreichend ist, um den gewünschten Prozentsatz an Partikeln mit einer unterhalb der vorbestimmten Obergrenze liegenden Feinheit in dem Zwischenprodukt zu erzielen auf den Weg über den Windsichter zu verzichten, d.h. das Produkt an dem Sichter vorbei im Sinne eines Bypasses des Sichters direkt dem Austragsabschnitt zuzuführen. Insgesamt wird durch diese Ausführungsform eine im Stand der Technik bisher nicht gekannte Flexibilität einer derartigen Futtermittelverarbeitungsanlage erzielt.

Eine Ausführungsform der Erfindung zeichnet sich dadurch aus, dass der Windsichter eine Luftansaugung zum Ansaugen von Außenluft aufweist, um den Windsichter mit Außenluft zu versorgen, wobei die Luftansaugung bevorzugt stromaufwärts eines Windsichter-Eingangs für den zu sichtenden Volumenstrom, weiter bevorzugt stromaufwärts eines Ausgangs der Dosierschleuse der vorgenannten Art, noch weiter bevorzugt stromaufwärts des ersten Ausgangs des zweiten 2-Wege-Verteilers der vorgenannten Art in die Anlage eingebunden ist. Durch die Ansaugung durch ein möglichst engmaschiges Ansauggitter wird vorteilhaft sichergestellt, dass keine Fremdkörper angesaugt werden, die den Transport oder die Sichtung des Volumenstroms innerhalb der Futtermittelverarbeitungsanlage beeinträchtigen könnten.

Eine Ausführungsform der Erfindung zeichnet sich dadurch aus, dass der Windsichter stromaufwärts der Hammermühle, und/oder stromabwärts der Hammermühle und/oder bevorzugt stromabwärts des ersten 2-Wege-Verteilers der vorgenannten Art und/oder des zweiten 2-Wege-Verteilers der vorgenannten Art angeordnet ist. Insbesondere bei einer Anordnung des Windsichters sowohl stromaufwärts der Hammermühle als auch stromabwärts der Hammermühle, wobei sowohl Windsichter als auch Hammermühle mit jeweils einem Ausgang des ersten 2-Wege-Verteilers verbunden sind und wobei stromabwärts der Hammermühle der zweite 2-Wege-Verteiler von der Hammermühle versorgt wird und ein erster Ausgang des zweiten 2-Wege-Verteilers den Austragsabschnitt mit dem von der Hammermühle abgegebenen Zwischenprodukt versorgen kann, während ein zweiter Ausgang des zweiten 2-Wege-Verteilers den Eingang des Windsichters versorgen kann, ist eine besonders vorteilhafte Ausführungsform der Erfindung gegeben. Denn durch diese Anordnung des Windsichters innerhalb der erfindungsgemäßen Anlage bzw. durch diese Anordnung der Sichtung in den Ablauf des erfindungsgemäßen Verfahrens ist es zum einen vorteilhaft möglich eine Vorsichtung des Rohgemisches vor einem Eintritt in die Hammermühle vorzunehmen, indem mit Hilfe des ersten 2-Wege-Verteilers das Rohgemisch an der Hammermühle vorbei zunächst in den Windsichter für eine Vorsichtung geleitet wird. Nur die im Rahmen einer solchen Sichtung des Rohgemisches vom Windsichter abgetrennten Partikel mit einer oberhalb der vorbestimmten Obergrenze liegenden Feinheit werden dann der Hammermühle zur Vermahlung zugeführt. Gleichzeitig ist es mit dieser Anordnung möglich, den ersten 2-Wege-Verteiler so zu schalten, dass das gesamte Rohgemisch direkt der Hammermühle zugeführt wird. Schließlich kann der zweite 2-Wege-Verteiler, der der Hammermühle stromabwärts nachgeschaltet ist, dass von der Hammermühle abgegebenen Zwischenprodukt auf einen mit dem Austragsabschnitt verbundenen Ausgang geben, wenn das Zwischenprodukt bereits den gewünschten Prozentsatz von Partikeln mit einer unterhalb der vorbestimmten Obergrenze liegenden Feinheit aufweist; oder der zweite 2-Wege-Verteiler kann auf den anderen Ausgang geschaltet werden, wenn das Zwischenprodukt noch nicht den Anforderungen genügt, also noch nicht den gewünschten Prozentsatz von Partikeln mit unterhalb einer vorbestimmten Obergrenze liegenden Feinheit aufweist, so dass das Zwischenprodukt durch den Windsichter einer Nachsichtung unterzogen werden kann.

Insgesamt zeichnet sich diese Ausführungsform durch eine enorme Flexibilität und Anpassbarkeit sowohl an die Rezepturzusammensetzung des Rohgemisches als auch an die Feinheitsanforderungen an das fertige Trockenfutter-Rohgemisch, welches vom Austragsabschnitt abgegeben wird. Auf diese Weise ist es beispielsweise möglich bei einer Feinheitsanforderung an das vom Austragsabschnitt abzugebende Trockenfutter-Produkt, bei dem beispielsweise 95 % der Partikel eine Feinheit von beispielsweise unterhalb 400-500 Mikrometer aufweisen sollen, unter vollständiger Aussparung des Windsichters mit Hilfe des ersten 2-Wege-Verteiler das gesamte Rohgemisch des Zufuhrabschnittes vollständig der Hammermühle zuzuführen und auch keine Nachsichtung des von der Hammermühle abgegebenen Zwischenprodukts durch den Windsichter durchführen zu lassen indem der zweite 2-Wege-Verteiler so geschaltet wird, dass dieser das gesamte von der Hammermühle abgegebene Zwischenprodukt direkt dem Austragsabschnitt zuführt, wenn die Hammermühle alleine in der Lage ist, dass vom Zufuhrabschnitt zugeführte Rohgemisch auf die gewünschte Qualität von 95 % der Teilchen mit einer Feinheit von beispielsweise unterhalb 400-500 Mikrometer zu bringen. Auf der anderen Seite kann die Anlage ohne jeglichen Umbau einfach durch entsprechende Schaltung des ersten und/oder des zweiten 2-Wege-Verteilers eine Vor- und/oder Nachsichtung durch den Windsichter vornehmen, um erhöhten Feinheitsanforderungen von bis zu einer Qualität von 95 % der Teilchen unterhalb der 250 Mikrometer vom Austragsabschnitt ausgeben lassen zu können.

Eine Ausführungsform der Erfindung zeichnet sich dadurch aus, dass der Windsichter stromaufwärts mit der Dosierschleuse der vorgenannten Art verbunden ist. Auf diese Weise wird eine optimale Entkopplung und zugleich ein Übergang von der mechanischen Förderung vom ersten 2-Wege-Verteiler zu der Dosierschleuse auf eine pneumatische Förderung von der Dosierschleuse in Richtung auf den stromabwärts positionierten Windsichter erzielt.

Eine Ausführungsform der Erfindung zeichnet sich dadurch aus, dass ein Ausgang des Windsichters stromabwärts mit der Hammermühle verbunden ist, um mittels der Sichtung des Windsichters abgetrennte Partikel mit einer oberhalb der bestimmten Obergrenze liegenden Feinheit der Hammermühle zuführen zu können. Auf diese Weise ist es vorteilhaft möglich, Bestandteile des Rohgemisches, die dem Windsichter direkt zugeführt wurden, bzw. Bestandteile des von der Hammermühle abgegebenen Zwischenprodukts, die bereits die gewünschten Feinheitsanforderungen erfüllen, direkt über einen Ausgang des Windsichters dem Austragsabschnitt zuzuführen, während Partikel mit einer oberhalb der bestimmten Obergrenze liegenden Feinheit erstmalig oder erneut der Hammermühle zugeführt werden können.

Eine Ausführungsform der Erfindung zeichnet sich dadurch aus, dass stromabwärts des Windsichters und stromaufwärts der Hammermühle eine mittels eines Motors angetriebene Zellenradschleuse als Barriere zwischen der Sichtung des Windsichters und der Vermahlung der Hammermühle in die Anlage eingebunden ist. Das Vorsehen einer Zellenradschleuse an der vorstehend beschriebenen Position sorgt dafür, dass Grobgut, d.h. ein die Feinheitsanforderungen nicht erfüllender Teil des dem Windsichter zugeführten Volumenstroms, zurück in den Vermahlungsprozess durch die Hammermühle geführt wird, wobei gleichzeitig die Zellenradschleuse als Barriere zwischen dem Sichtungssystem durch den Windsichter und dem Vermahlungssystem durch die Hammermühle fungiert, wodurch vorteilhaft verhindert wird, dass durch einen die Luft aus dem Windsichter absaugenden Ventilator Falschluft aus der Hammermühle bzw. aus den der Hammermühle vorgelagerten Elementen in den Windsichter angesaugt wird. Durch die derart positionierte Zellenradschleuse wird somit eine kontrollierte Luftmengen- und Luftdrucksituation im Windsichter sichergestellt, was wiederum vorteilhaft zu einer effizienten Sichtung und einer Energieeinsparung für die Aspiration durch einen die Luft aus dem Windsichter absaugenden Ventilator sorgt.

Eine Ausführungsform der Erfindung zeichnet sich dadurch aus, dass ein Windsichter-Ausgang mit einem Eingang des Austragsabschnitts verbunden ist, sodass von dem Windsichter Partikel mit einer unterhalb der vorbestimmten Obergrenze liegenden Feinheit an den Austragsabschnitt abgebbar sind. Durch eine solche direkte Verbindung eines Windsichter-ausgangs mit einem Eingang des Austragsabschnittes wird vorteilhaft erreicht, dass Partikel, die bereits die gewünschte, unterhalb der vorbestimmten Obergrenze liegenden Feinheit in einem gewünschten prozentualen Ausmaß aufweisen, nicht erneut einer Vermahlung durch die Hammermühle unterzogen werden müssen, sondern vielmehr direkt an den Austragsabschnitt abgehbar und von diesem direkt austragbar sind. Es kommt somit erfindungsgemäß durch eine solche Anordnung des Windsichters in der Anlage bzw. im erfindungsgemäßen Verfahren zu einem gegenüber dem Stand der Technik deutlich verringerten Energie bzw. Wärmeeintrag in die Partikel durch die Hammermühle, da die Partikel in der Hammermühle eine im Vergleich zum Stand der Technik geringere Verweilzeit aufweisen.

Eine Ausführungsform der Erfindung zeichnet sich dadurch aus, dass über einen Windsichter-Ausgang Partikel mit einer unterhalb der vorbestimmten Obergrenze liegenden Feinheit von dem Windsichter an einen stromabwärts des Ausgangs des Windsichters zwischen Windsichter und Austragsabschnitt vorgesehenen und mit dem Windsichter-Ausgang verbundenen Totalabscheider abgebbar sind, wobei mittels des Totalabscheiders die den Windsichter zusammen mit der Transportluft verlassenen Partikel von dieser Transportluft trennbar sind, um dem Austragsabschnitt die Partikel ohne Transportluft zur Verfügung zu stellen. Durch den Totalabscheider wird vorteilhaft Luft abgetrennt, so dass nahezu reine Produktfraktion den Austragsabschnitt bzw. den Hauptmischer im Austragsabschnitt erreicht.

Eine Ausführungsform der Erfindung zeichnet sich dadurch aus, dass die Transportluft mittels eines mittels eines Motors angetriebenen Ventilators aus dem Totalabscheider und somit auch aus dem Windsichter absaugbar ist, um im Windsichter einen gewünschten Luftvolumenstrom zur Verfügung zu stellen. Mit Hilfe eines derartigen Ventilators ist es möglich, die notwendige Prozessluft in den Windsichter einzusaugen und aus diesem wieder abzusaugen, um somit innerhalb des Sichtungssystems, insbesondere innerhalb des Windsichters, für das für den gewünschten Sichtungserfolg passende Luftvolumen und den passenden Luftdruck im Windsichter zu sorgen, um so im Ergebnis ein optimales Sichtungsergebnis für den gewählten Windsichter zu erzielen. Insbesondere wird durch den Ventilator vorteilhaft ein optimal mit der Prozessluft zum und in den Windsichter transportiertes, innerhalb des Windsichters mittels seines Sichterrades optimal separiertes und im Anschluss daran zum Totalabscheider abgeführten Volumenstrom erzielt. Insgesamt wird somit eine energieeffiziente, trennscharfe und maximale Sichtungsleistung des Windsichters erreicht.

Eine Ausführungsform der Erfindung zeichnet sich dadurch aus, dass stromabwärts des Windsichters und stromaufwärts des Austragsabschnitts eine mittels eines Motors angetriebene und mit dem Windsichter-Ausgang verbundene Austragsschleuse vorgesehen ist, um ein Ansaugen von Falschluft von stromabwärts der Austragsschleuse nach stromaufwärts der Austragsschleuse zu verhindern. Mit Hilfe einer derartigen Austragsschleuse wird vorteilhaft ein Abschluss bzw. Übergang des pneumatischen Transports aus dem Windsichter stromabwärts in Richtung der Austragsschleuse zu einem mechanischen Transport bzw. einer mechanischen Förderung von der Austragsschleuse in Richtung auf den strömabwärts der Austragsschleuse gelegenen Austragsabschnitt erreicht. Vor allen Dingen wird jedoch durch das Verhindern von Ansaugen von Falschluft von stromabwärts der Austragsschleuse nach stromaufwärts der Austragsschleuse eine kontrollierte Luftmengen- und Luftdrucksituation im stromaufwärts der Austragsschleuse liegenden Totalabscheider sichergestellt. Ebenso wird sichergestellt, dass die von dem dem Totalabscheider zugeordneten Ventilator abgesaugte Luft ausschließlich aus dem Totalabscheider bzw. dem stromaufwärts des Totalabscheiders angeordneten Windsichter abgesaugt wird, wodurch es insgesamt zu einer effizienten Sichtung im Windsichter kommt. Schließlich kommt es durch die Trennung durch die Austragsschleuse zu einer Energieeinsparung bei der Aspiration durch den dem Totalabscheider bzw. dem Windsichter zugeordneten, vorgenannten Ventilator zur Absaugung der Prozessluft aus dem Windsichter.

Eine Ausführungsform der Erfindung zeichnet sich dadurch aus, dass der Austragsabschnitt einen mit der Hammermühle und/oder dem Windsichter verbundenen Hauptmischer aufweist, mittels dessen ein stromaufwärts des Hauptmischers entmischtes Zwischenprodukt in ein homogen gemischtes Trockenfutter-Produkt homogenisierbar ist. Vorteilhaft ist im Austragsabschnitt ein Mischer oder Hauptmischer vorgesehen, um das von der Hammermühle abgegebene Zwischenprodukt bzw. das von dem Windsichter erhaltende Produkt für die dem Austragsabschnitt nachgelagerte Prozessstufe zu mischen. Denn es kann innerhalb der erfindungsgemäße Anlage bzw. innerhalb des erfindungsgemäßen Verfahrens zu einer Entmischung der Bestandteile des Volumenstroms kommen. Insbesondere bei einem Bypass der Hammermühle, wie er oben mehrfach beschrieben ist, kann es zu einer Entmischung der homogenen Rohmaterialien des Rohgemischs kommen, die durch den Hauptmischer im Austragsabschnitt behoben werden kann. Eine solche homogene Mischung ist wichtig, um eine kontinuierliche und effiziente Verarbeitung des vom Austragsabschnitt abgegebenen Produkts in einem nächsten Prozessschritt zu ermöglichen und somit letztendlich eine gleichmäßige Verteilung aller Rezeptbestandteile des Rohgemischs auch im Endprodukt sicherzustellen. Denn einzelne Bestandteile der Rezeptur des Rohgemischs könnten, sollten Sie einzeln oder ungemischt vom Austragsabschnitt für eine weitere Verarbeitung abgegeben werden, in einer solchen weiteren Verarbeitung Probleme verursachen, zumindest die Produktqualität eines fertigen Produkts beeinträchtigen. Schließlich ist in jedem Fall eine Verarbeitung eines homogen gemischten Trockenfutter-Produkts, welches den Auftragsabschnitt verlässt, energieeffizienter als die Verarbeitung von einzelnen Bestandteilen in nachfolgenden Prozessschritten.

Eine Ausführungsform der Erfindung zeichnet sich dadurch aus, dass der Hauptmischer mit einem Windsichter-Ausgang über die Austragsschleuse der vorgenannten Art und/oder über den Totalabscheider der vorgenannten Art verbunden ist. Diese Anordnung realisiert eine optimale Einbindung des Hauptmischers in die Anlage bzw. das erfindungsgemäße Verfahren.

Eine Ausführungsform des erfindungsgemäßen Verfahrens zeichnet sich dadurch aus, dass zumindest ein Teil, bevorzugt die Gesamtmenge, des Rohgemischs vor dem Vermahlen durch die Hammermühle dem Windsichter zugeführt wird. Die Vorteile dieser Ausführungsform liegen insbesondere darin, dass Bestandteile bzw. Partikel des Trockenfutter-Rohgemischs, die bereits eine unterhalb der vorbestimmten Obergrenze liegende Feinheit, beispielsweise bereits eine Feinheit von unterhalb von 250 Mikrometer aufweisen, von dem erfindungsgemäßen Windsichter vor Eintritt in die Mühle erfindungsgemäß gesichtet und somit an der Hammermühle vorbeigeführt werden können, um deren Effizienz zu verbessern. Mit anderen Worten wird bei dieser Ausführungsform eine Vorsichtung des Trockenfutter-Rohgemischs vor der Vermahlung durch die Hammermühle vorgenommen und ein Bypass der Hammermühle für Partikel mit einer unterhalb der vorbestimmten Obergrenze liegenden Feinheit ermöglicht, was zu einer erheblichen Effizienzsteigerung der Hammermühle führt. Denn die Hammermühle muss dann nur noch diejenigen Partikel des Trockenfutter-Rohgemischs vermahlen, die einen oberhalb der vorbestimmten Obergrenze liegenden Wert der Feinheit aufweisen. Dies reduziert erneut die Verweildauer der zu vermahlenden Partikel in der Hammermühle und somit den Wärmeeintrag in diese Partikel, so dass sich die Qualität des von der Hammermühle abgegebenen Zwischenprodukts gegenüber dem Stand der Technik aufgrund des erfindungsgemäß geringeren Wärmeeintrags in das Zwischenprodukt gegenüber dem Stand der Technik erhöht.

Eine Ausführungsform des erfindungsgemäßen Verfahrens zeichnet sich dadurch aus, dass zumindest ein Teil, bevorzugt die Gesamtmenge, eines durch die Vermahlung durch die Hammermühle entstandenen Zwischenprodukts dem Windsichter zugeführt wird. Die Vorteile dieser Ausführungsform liegen insbesondere darin, dass - je nach Rezepturzusammensetzung und Feinheitsanforderung an die vorbestimmte Obergrenze der Feinheit - sichergestellt werden kann, dass keine zu großen Partikel in dem durch die Vermahlung durch die Hammermühle entstandenen Zwischenprodukt den Austragsabschnitt der Anlage, insbesondere beispielswiese einen Hauptmischer der nachfolgend beschriebenen Art, erreichen. Somit wird insgesamt die Produktqualität des die Hammermühle verlassenen Zwischenprodukts durch eine schärfere Oberkornbegrenzung erhöht.

Das erfindungsgemäße Verfahren zeichnet sich dadurch aus, dass Partikel mit einer unterhalb der vorbestimmten Obergrenze liegenden Feinheit dem Austragsabschnitt unter Umgehung der Hammermühle mittels eines ersten Deflektorsichter-Ausgangs zugeführt werden, während Partikel mit einer oberhalb der vorbestimmten Obergrenze liegenden Feinheit der Hammermühle mittels eines zweiten Windsichter-Ausgangs zugeführt werden. Diese Ausführungsform weist insbesondere die Vorteile der beiden vorstehenden Ausführungsformen auf. Mit anderen Worten liefert diese Ausführungsform eine konkrete Umsetzung zur Realisierung einer Kombination der Vorteile beider vorgenannten Ausführungsformen. Somit ist es bei dieser Ausführungsform zum einen vorteilhaft möglich im Rahmen der Vorsichtung bereits vor der Vermahlung durch die Hammermühle diejenigen Bestandteile der Rezeptur des Trockenfutter-Rohgemischs, die bereits eine unterhalb der vorbestimmten Obergrenze liegende Feinheit aufweisen, in der Art eines Bypasses an der Hammermühle vorbei zu führen, um die Effizienz der Hammermühle zu verbessern, während andererseits das von der Hammermühle erzeugte Zwischenprodukt gesichtet wird, so dass keine zu großen Partikel den Austragsabschnitt, beispielweise den nachfolgend beschriebenen Hauptmischer des Austragsabschnittes, erreichen und somit die Produktqualität im Austragsabschnitt durch eine schärfere Oberkornbegrenzung erhöht wird.

Eine Ausführungsform des erfindungsgemäßen Verfahrens zeichnet sich dadurch aus, dass der Zufuhrabschnitt einen ersten 2-Wege-Verteiler aufweist, wobei der erste 2-Wege-Verteiler einen Eingang, einen ersten mit der Hammermühle verbundenen Ausgang und einen zweiten mit dem Windsichter verbundenen Ausgang aufweist, wobei dem Eingang Rohgemisch zugeführt wird, wobei mittels einer Stellvorrichtung eine Abgabe des Rohgemischs über den ersten Ausgang oder eine Abgabe des Rohgemischs über den zweiten Ausgang ausgewählt wird. Diese Ausführungsform bietet den Vorteil, dass durch den wie eine Weiche funktionierenden ersten 2-Wege-Verteiler eine Leitung des den Eingang des ersten 2-Wege-Verteilers erreichenden Produktstroms aus Trockenfutter-Rohgemisch in die eine oder andere Richtung ermöglicht wird. Somit kann der den Eingang des ersten 2-Wege-Verteilers erreichende Produktstrom des Trockenfutter-Rohgemischs je nach Vormischung bzw. Rezeptur des Trockenfutter-Rohgemischs und der sich darin befindenden Partikelgrößenverteilung bzw. Partikelfeinheitenverteilung entweder direkt auf die Hammermühle geleitet werden oder zuerst auf den Windsichter geleitet werden. Somit bietet diese Ausführungsform insbesondere den Vorteil, dass in Abhängigkeit von der Rezeptur des Trockenfutter-Rohgemischs und den Feinheitsanforderungen, d.h. insbesondere den Anforderungen an die Feinheit des fertigen Trockenfutter-Produkts, konkret den gewünschten prozentualen Anteil von Partikeln mit einer unterhalb einer vorbestimmten Obergrenze liegenden Feinheit, wahlweise direkt in der Hammermühle vermahlen werden und danach mittels des Windsichters gesichtet werden, oder vorab mittels des Windsichters gesichtet werden und anschließend mit der Hammermühle vermahlen werden. Durch die letztgenannte, so genannte Vorsichtung vor der Vermahlung durch die Hammermühle können Bestandteile des Trockenfutter-Rohgemischs, die bereits die gewünschte unterhalb der vorbestimmten Obergrenze liegende Feinheit aufweisen, wie zuvor beschrieben direkt an den Austragsabschnitt, beispielsweise den Hauptmischer des Austragsabschnitts, weitergeleitet werden, ohne die Kapazität der Hammermühle zu belasten.

Eine Ausführungsform des erfindungsgemäßen Verfahrens zeichnet sich dadurch aus, dass mittels einer motorgetriebenen, stromabwärts des Zufuhrabschnitts und stromaufwärts des Windsichters angeordneten Dosierschleuse ein von dem Zufuhrabschnitt kommender Volumenstrom des Rohgemischs dosiert dem Windsichter zugefördert wird, wobei die Dosierschleuse bevorzugt zugleich eine Entkopplung und/oder einen Übergang von einer von dem Zufuhrabschnitt zu der Dosierschleuse mechanisch erfolgenden Förderung des Volumenstroms des Rohgemischs zu einer von der Dosierschleuse zu dem Windsichter pneumatisch erfolgenden Förderung des Volumenstroms des Rohgemischs vornimmt. Durch die vorgenannte Entkopplung wird vorteilhaft erreicht, dass der Produktvolumenstrom von der mechanischen Förderung in die pneumatische Förderung zum Transport zu dem Windsichter übergeben werden kann, ohne dass Falschluft aus der mechanischen Förderung angesaugt wird. Somit wird vorteilhaft eine stabile, gleichmäßige pneumatische Förderung zum Windsichter sichergestellt.

Eine Ausführungsform des erfindungsgemäßen Verfahrens zeichnet sich dadurch aus, dass mittels einer stromabwärts von der Hammermühle angeordneten und mittels eines Motors angetriebenen Austragsschleuse eine mechanische Förderung eines von der Hammermühle abgegebenen Zwischenprodukts abgeschlossen wird, das Zwischenprodukt an eine weitere Verarbeitung innerhalb der Anlage abgegeben wird und gleichzeitig einen Eintritt von Falschluft in die Hammermühle verhindert wird. Mit Hilfe der Austragsschleuse wird insbesondere weiter vorteilhaft verhindert, dass durch die Aspiration des vorstehend genannten Ventilators Falschluft über einen Ausgang der Austragsschnecke des vorgenannten Nachbehälters angesaugt wird und somit der Vermahlungsprozess durch die Hammermühle negativ beeinflusst werden würde. Insgesamt stellt somit die Austragsschleuse eine kontrollierte Luftmengen- und Luftdrucksituation im vorgenannten Nachbehälter bzw. im vorgenannten Filter sicher, insbesondere auch eine ausschließliche Ansaugung der Prozessluft durch die Hammermühle. Insgesamt wird eine effiziente Vermahlung durch die Hammermühle und eine Energieeinsparung für die Aspiration durch den vorgenannten Ventilator sichergestellt.

Eine Ausführungsform des erfindungsgemäßen Verfahrens zeichnet sich dadurch aus, dass stromabwärts der Hammermühle und stromaufwärts des Austragsabschnitts ein zweiter 2-Wege-Verteiler vorgesehen ist, wobei der zweite 2-Wege-Verteiler einen mit der Hammermühle verbundenen Eingang, einen mit dem Windsichter verbundenen ersten Ausgang und einen mit dem Austragsabschnitt verbundenen zweiten Ausgang aufweist, wobei dem Eingang durch die Vermahlung durch die Hammermühle entstandenes Zwischenprodukt zugeführt wird, wobei mittels einer Stellvorrichtung eine Abgabe des Zwischenprodukts über den ersten oder über den zweiten Ausgang gewählt wird. Diese Ausführungsform bietet den Vorteil, dass durch den wie eine Weiche funktionierenden zweiten 2-Wege-Verteiler eine Leitung des den Eingang des zweiten 2-Wege-Verteilers erreichenden Volumenstroms des von der Hammermühle abgegebenen Zwischenprodukts in die eine oder andere Richtung ermöglicht wird. Somit kann durch den 2-Wege-Verteiler das Zwischenprodukt zum einen dem Windsichter zugeführt werden, und zum anderen dem Austragsabschnitt der Futtermittelverarbeitungsanlage zugeführt werden. Die besonderen Vorteile dieser Ausführungsform liegen insbesondere darin, dass durch den zweiten 2-Wege-Verteiler das Zwischenprodukt je nach Rezeptur und Feinheitsanforderung an das vom Austragsabschnitt abzugebende Trockenfutter-Rohgemisch direkt dem Austragsabschnitt zugeführt werden kann, wenn das Zwischenprodukt bereits die Anforderungen erfüllt oder dem Windsichter zugeführt werden kann, wenn eine Sichtung durch den Windsichter erforderlich ist. Durch letzteres kann sichergestellt werden, dass nur Zwischenprodukt-Partikel mit einer unterhalb der vorbestimmten Obergrenze liegenden Feinheit den Austragsabschnitt erreichen, während Zwischenprodukt-Partikel mit einer oberhalb der vorbestimmten Obergrenze liegenden Feinheit erneut dem Vermahlungsprozess zugeführt werden. Andererseits, wenn das Vermahlungsspektrum der Hammermühle ausreichend ist, um den gewünschten Prozentsatz an Partikeln mit einer unterhalb der vorbestimmten Obergrenze liegenden Feinheit in dem Zwischenprodukt zu erzielen auf den Weg über den Windsichter zu verzichten, d.h. das Produkt an dem Sichter vorbei im Sinne eines Bypasses des Sichters direkt dem Austragsabschnitt zuzuführen. Insgesamt wird durch diese Ausführungsform eine im Stand der Technik bisher nicht gekannte Flexibilität einer derartigen Futtermittelverarbeitungsanlage erzielt.

Eine Ausführungsform des erfindungsgemäßen Verfahrens zeichnet sich dadurch aus, dass der Windsichter durch eine Luftansaugung zum Ansaugen von Außenluft mit Außenluft versorgt wird, wobei die Luftansaugung bevorzugt stromaufwärts eines Windsichter-Eingangs für den zu sichtenden Volumenstrom, weiter bevorzugt stromaufwärts des ersten Ausgangs des vorgenannten zweiten 2-Wege-Verteilers vorgenommen wird. Durch die Ansaugung durch ein möglichst engmaschiges Ansauggitter wird vorteilhaft sichergestellt, dass keine Fremdkörper angesaugt werden, die den Transport oder die Sichtung des Volumenstroms innerhalb der Futtermittelverarbeitungsanlage beeinträchtigen könnten.

Eine Ausführungsform des erfindungsgemäßen Verfahrens zeichnet sich dadurch aus, dass mittels der Sichtung des Windsichters abgetrennte Partikel mit einer oberhalb der bestimmten Obergrenze liegenden Feinheit der Hammermühle zugeführt werden. Auf diese Weise ist es vorteilhaft möglich, Bestandteile des Rohgemisches, die dem Windsichter direkt zugeführt wurden, bzw. Bestandteile des von der Hammermühle abgegebenen Zwischenprodukts, die bereits die gewünschten Feinheitsanforderungen erfüllen, direkt über einen Ausgang des Windsichters dem Austragsabschnitt zuzuführen, während Partikel mit einer oberhalb der bestimmten Obergrenze liegenden Feinheit erstmalig oder erneut der Hammermühle zugeführt werden können.

Eine Ausführungsform des erfindungsgemäßen Verfahrens zeichnet sich dadurch aus, dass mittels einer stromabwärts des Windsichters und stromaufwärts der Hammermühle angeordneten und mittels eines Motors angetriebenen Zellenradschleuse eine Barriere zwischen der Sichtung des Windsichters und der Vermahlung der Hammermühle geschaffen wird. Das Vorsehen einer Zellenradschleuse an der vorstehend beschriebenen Position sorgt dafür, dass Grobgut, d.h. ein die Feinheitsanforderungen nicht erfüllender Teil des dem Windsichter zugeführten Volumenstroms, zurück in den Vermahlungsprozess durch die Hammermühle geführt wird, wobei gleichzeitig die Zellenradschleuse als Barriere zwischen dem Sichtungssystem durch den Windsichter und dem Vermahlungssystem durch die Hammermühle fungiert, wodurch vorteilhaft verhindert wird, dass durch einen die Luft aus dem Windsichter absaugenden Ventilator Falschluft aus der Hammermühle bzw. aus den der Hammermühle vorgelagerten Elementen in den Windsichter angesaugt wird. Durch die derart positionierte Zellenradschleuse wird somit eine kontrollierte Luftmengen- und Luftdrucksituation im Windsichter sichergestellt, was wiederum vorteilhaft zu einer effizienten Sichtung und einer Energieeinsparung für die Aspiration durch einen die Luft aus dem Windsichter absaugenden Ventilator sorgt.

Eine Ausführungsform des erfindungsgemäßen Verfahrens zeichnet sich dadurch aus, dass von dem Windsichter Partikel mit einer unterhalb der vorbestimmten Obergren-ze liegenden Feinheit über einen Windsichter-Ausgang an einen Eingang des Aus-tragsabschnitts abgegeben werden. Durch eine solche direkte Verbindung eines Windsichterausgangs mit einem Eingang des Austragsabschnittes wird vorteilhaft erreicht, dass Partikel, die bereits die gewünschte, unterhalb der vorbestimmten Obergrenze liegenden Feinheit in einem gewünschten prozentualen Ausmaß aufweisen, nicht erneut einer Vermahlung durch eine Hammermühle unterzogen werden müssen, sondern vielmehr direkt an den Austragsabschnitt abgehbar und von diesem direkt austragbar sind. Es kommt somit erfindungsgemäß durch eine solche Anordnung des Windsichters in der Anlage bzw. im erfindungsgemäßen Verfahren zu einem gegenüber dem Stand der Technik deutlich verringerten Energie bzw. Wärmeeintrag in die Partikel durch die Hammermühle, da die Partikel in der Hammermühle eine im Vergleich zum Stand der Technik geringere Verweilzeit aufweisen.

Bevorzugte Ausführungsformen der Erfindung werden nun anhand der Zeichnung beschrieben. Gleiche oder funktionsgleiche Teile werden mit denselben Bezugszeichen bezeichnet.
- Figur 1: zeigt eine Ausführungsform einer erfindungsgemäßen Futtermittelverarbeitungsanlage und Ausführungsformen des erfindungsgemäßen Verfahrens zur Herstellung eines Trockenfutter-Produkts;
- Figur 2: zeigt eine schematische Schnittansicht einer Ausführungsform eines Windsichters gemäß Figur 1; und
- Figur 3: zeigt einen Schnitt entlang der Linie A-A der Figur 2 ohne die Aussenwand des Windsichters.

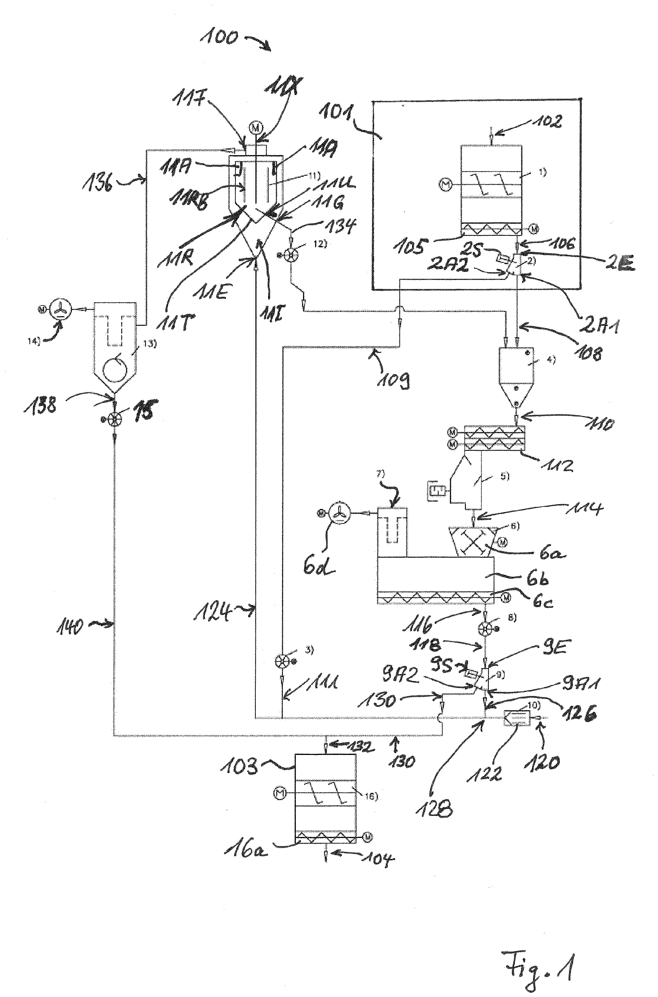

Figur 1 zeigt eine Ausführungsform einer erfindungsgemäßen Futtermittelverarbeitungsanlage 100 zur Herstellung eines Trockenfutter-Produkts aus einem Trockenfutter-Rohgemisch und veranschaulicht auch ein erfindungsgemäßes Verfahren zur Herstellung eines Trockenfutter-Produkts aus einem Trockenfutter-Rohgemisch mit Hilfe der vorgenannten Anlage 100.

Die Anlage 100 zur Herstellung eines Trockenfutter-Produkts aus einem Trockenfutter-Rohgemisch weist einen Zufuhrabschnitt 101 auf, in dem das Rohgemisch gemäß Pfeil 102 zugeführt wird. Die Anlage 100 weist weiterhin eine mit dem Zufuhrabschnitt 101 verbundene Hammermühle 6 zum Vermahlen mindestens eines Teils des zugeführten Rohgemischs auf. Die Anlage 100 weist weiterhin einen mit der Hammermühle 6 verbundenen Austragsabschnitt 103 auf, in dem das Produkt gemäß Pfeil 104 ausgetragen wird. Die Anlage 100 zeichnet sich insbesondere dadurch aus, dass zwischen dem Zufuhrabschnitt 101 und dem Austragsabschnitt 103 ein Windsichter 11 zum Sichten von Partikeln mit einer unterhalb einer vorbestimmten Obergrenze liegenden Feinheit vorgesehen ist, wobei die Feinheit der Partikel einen maximalen Durchmesser der Partikel bedeutet.

Der Zufuhrabschnitt 101 weist einen mit Hilfe eines Motors M antreibbaren Vormischer 1 auf. In der Zeichnung sind der Übersichtlichkeit halber alle Motoren mit den Bezugszeichen M bezeichnet, soweit es sich um bekannte oder übliche Standardantriebsmotoren handelt. Mittels des Vormischers 1 ist das Trockenfutter-Rohgemisch durch Mischung von Trockenfutter-Rohmaterial-Bestandteilen herstellbar. Der Vormischer 1 mischt also das Rohmaterialrezept und stellt aus den Rohmaterial-Rezeptbestandteilen ein homogenes Gemisch her. Abgebildet ist ein horizontaler Mischer 1. Aber auch andere Mischer können eine homogene Mischung herstellen. Unmittelbar unterhalb des Vormischers 1 ist ein mittels eines Antriebsmotors M antreibbarer Austragsförderer 105 angeordnet.

Unterhalb des Austragsförderers 105 und mit dieser über eine Leitung gemäß Pfeil 106 verbunden weist der Zufuhrabschnitt 101 einen ersten 2-Wege-Verteiler 2 auf. Der erste 2-Wege-Verteiler 2 weist einen mit der Produktleitung 106 verbundenen Eingang 2E, einen mit der Hammermühle 6 verbundenen ersten Ausgang 2A1 und einen mit dem Windsichter 11 verbundenen zweiten Ausgang 2A2 auf. Dem Eingang 2E des ersten 2-Wege-Verteilers 2 ist über die Förderleitung 106 mechanisch im Wesentlichen durch Schwerkraft das von dem Austragsförderers 105 abgegebene homogene Rohgemisch zuführbar. Mittels einer Stellvorrichtung 2S ist eine Abgabe des Rohgemischs über den ersten Ausgang 2A1 oder über den zweiten Ausgang 2A2 auswählbar. Der erste 2-Wege-Verteiler 2 funktioniert demnach im Wesentlichen wie eine Weiche und leitet den Produktstrom, der sich in der Rohleitung 106 durch Schwerkraft nach unten in den Eingang 2E bewegt, in die eine oder andere Richtung. Somit gelangt Produktstrom nach der Vormischung durch den Vormischer 1 entweder auf die Hammermühle 6 oder wird zuerst auf den Windsichter 11 geleitet. Somit kann durch den ersten 2-Wege-Verteiler 2 die Anlage je nach Rezeptur und Feinheitsanforderung das über die Leitung 106 zugeführte homogene Rohgemisch wahlweise zuerst in der Hammermühle 6 vermahlen und danach im Windsichter 11 sichten oder vorab im Windsichter 11 sichten und danach in der Hammermühle 6 vermahlen. Somit können durch eine Sichtung durch den Windsichter 11 vor einer Vermahlung durch die Hammermühle 6 Bestandteile der Rezeptur, die bereits eine ausreichende Feinheit besitzen, direkt an den Austragsabschnitt 103 geleitet werden, ohne die Kapazität der Hammermühle 6 zu belasten.

Unterhalb des ersten Ausgangs 2A1, und durch eine mit Schwerkraft mechanisch fördernde Förderleitung 108 mit diesem verbunden, ist stromabwärts des Zufuhrabschnitts 101 und stromaufwärts der Hammermühle 6 ein als Pufferspeicher wirkendender Vorbehälter 4 vorgesehen, um vom Zufuhrabschnitt 101 erhaltenes Rohgemisch vor einer Abgabe an die Hammermühle 6 zwischenzuspeichern. Der Vorbehälter 4 speichert vom Zufuhrabschnitt 101 erhaltendes Rohgemisch, um eine ständige Produktvorlage sicher zu stellen, so dass innerhalb der Anlage stetig gefördert und in der Folge auch stetig mit Hilfe der Hammermühle 6 vermahlen werden kann und somit keine Schwankungen in der Auslastung der Hammermühle 6 auftreten.

Unterhalb des zweiten Ausgang 2A2, und durch eine mit Schwerkraft mechanisch fördernde Förderleitung 109 mit diesem verbunden, ist stromabwärts des Zufuhrabschnitts 101 und stromaufwärts des Windsichters 11 eine mit Hilfe eines Motors M antreibbare Dosierschleuse 3 vorgesehen, mittels derer ein von dem Zufuhrabschnitt 101 kommender Volumenstrom des Rohgemischs dosiert dem Windsichter 11 zuförderbar ist. Die Dosierschleuse 3 stellt zugleich eine Entkopplung und einen Übergang von einer von dem Zufuhrabschnitt 101 zu der Dosierschleuse 3 mechanisch erfolgenden Förderung des Volumenstroms des Rohgemischs in der Förderleitung 109 zu einer von der Dosierschleuse 3 zu dem Windsichter 11 in einer Förderleitung 111 pneumatisch erfolgenden Förderung des Volumenstroms des Rohgemischs dar. Die Förderleitung 111 mündet in eine weiter unten beschriebene Förderleitung 124 zu dem Windsichter 11. Die Dosierschleuse 3 sorgt somit dafür, dass der Volumenstrom des Rohgemischs aus der mechanischen Förderung in der Förderleitung 109 in eine pneumatische Förderung in die Förderleitung 111 bzw. 124 zum Transport auf den Windsichter 11 übergeben wird, ohne das Falschluft aus der mechanischen Förderung in der Förderleitung 109 von dem Windsichter 11 angesaugt wird. Die Dosierschleuse 3 stellt somit eine stabile, gleichmäßige pneumatische Förderung von einer weiter unten beschriebenen Luftansaugung 10 des Windsichters 11 zum Windsichter 11 sicher.

Unterhalb des Vorbehälters 4 und mit diesem über eine mittels Schwerkraft mechanisch fördernde Förderleitung 110 verbunden ist, weiter stromabwärts des Zufuhrabschnitts 101, eine zwei Antriebsmotoren M aufweisende motorgetriebene Dosierschnecke 112 vorgesehen, die Teil einer Speisung 5 ist, um eine gleichmäßige Auslastung der Hammermühle 6 zu gewährleisten. Hierzu dient eine Auslastung eines Antriebsmotors M der Hammermühle 6 als Vorgabe für die Leistung der Dosierschnecke 112.

Die Speisung 5 weist neben der Dosierschnecke 112 eine Doppel-Magnet-Kascade und eine Schwerteilauslese auf, um magnetische und nicht magnetische Fremdkörper, d.h. im Trockenfutter-Produkt unerwünschte Bestandteile des über die Verbindung 110 in die Speisung 5 gelangten Rohgemischs vor einem Eintritt des Rohgemisch-Volumenstroms in die Hammermühle 6 auszusortieren. Insbesondere fördert die Speisung 5 somit das Mahlgut gleichmäßig und lastabhängig auf die unterhalb der Speisung 5 liegende Hammermühle 6. Diese gleichmäßige Förderung des Mahlguts stellt sicher, dass in der Hammermühle 6 stetig vermahlen werden kann und keine Schwankungen in der Auslastung der Hammermühle 6 auftreten.

Unterhalb der Speisung 5 und mit dieser über eine mittels Schwerkraft mechanisch arbeitende Verbindung 114 verbunden befindet sich die Hammermühle 6, die mittels eines Antriebsmotors M angetrieben wird. Die Hammermühle 6 zerkleinert das hier über die Verbindung 114 aufgegebene Material. Dieses Material wird luftunterstützt und durch Schwerkraft einem Mahlraum 6a der Hammermühle 6 zugeführt und dort in bei Hammermühlen üblicherweise im Zusammenwirken mit an einem Rotor befestigten Schlägerreihen und Prallflächen und Siebelementen in der Hammermühle 6 zerkleinert. Das dabei entstehende Vermahlungsspektrum wird in einer bei Hammermühlen üblicherweise im Oberkorn durch in der Hammermühle 6 eingesetzte Siebe begrenzt, d.h. erst wenn die Partikelgröße der Partikel wesentlich kleiner als die Sieböffnung der eingesetzten Siebe ist, kann das Produkt den Mahlraum 6a wiederum luftunterstützt verlassen.

Stromabwärts und vertikal unterhalb der Hammermühle 6 befindet sich direkt unter der Hammermühle 6 ein Nachbehälter 6b mit einer mittels eines Motors M angetriebenen Austragsschnecke 6c, um das von der Hammermühle 6 vermahlene Zwischenprodukt aufzufangen und aus dem Nachbehälter 6b auszutragen.

Mit dem Nachbehälter 6b ist ein mittels eines Motors angetriebener Ventilator 6d verbunden, mittels dessen Prozessluft durch die Hammermühle 6 und dem Nachbehälter 6b absaugbar ist, wobei zwischen dem Nachbehälter 6b und dem Ventilator 6d ein Filter 7 vorgeschaltet ist, mittels dessen Produktstaub aus der von dem Ventilator 6d abgesaugten Prozessluft herausfilterbar ist.

Mittels des Filters 7 findet somit eine Trennung von Prozessluft und Produktstaub statt. Durch das Absaugen der Prozessluft mit Hilfe des Ventilators 6d aus dem Nachbehälter 6b wird somit ein kompaktiertes Zwischenprodukt zur Verfügung gestellt, welches mit Hilfe der Austragsschnecke 6c aus dem Nachbehälter 6b ausgetragen werden kann, so dass die weitere Verarbeitung des Zwischenprodukts ohne die für die Vermahlung in der Hammermühle 6 notwendige Aspirationsluft erfolgen kann. Der Ventilator 6d zeugt somit auch die notwendige Aspirationsluft für die Hammermühle 6a und sorgt vorteilhaft für passende Werte für Luftvolumen und Saugkraft um ein optimales Vermahlungsergebnis durch die Hammermühle 6 zu erzielen.

Unterhalb der Austragsschnecke 6c und somit stromabwärts von der Hammermühle 6 ist eine mittels eines Motors M antreibbare Austragsschleuse 8 vorgesehen, um eine mechanische Förderung eines von der Hammermühle 6 bzw. der Austragsschnecke 6c abgegebenen Zwischenprodukts abzuschließen und das Zwischenprodukt an eine weitere Verarbeitung innerhalb der Anlage 100 abzugeben und gleichzeitig einen Eintritt von Falschluft in die Hammermühle 6 zu verhindern.

Stromabwärts der Austragsschleuse 8 und somit auch stromabwärts der Hammermühle 6 und stromaufwärts des Austragsabschnitts 103 ist ein zweiter 2-Wege-Verteiler 9 vorgesehen ist. Der zweite 2-Wege-Verteiler 9 weist einen Eingang 9E, einen ersten Ausgang 9A1 und einen zweiten Ausgang 9A2 auf. Der Eingang 9E ist über eine Förderleitung 118 mit der Austragsschleuse 8 verbunden, so dass dem Eingang 9E durch die Vermahlung durch die Hammermühle 6 entstandenes Zwischenprodukt zuführbar ist. Eine Abgabe des Zwischenprodukts aus dem zweiten 2-Wege-Verteiler 9 kann über den ersten Ausgang 9A1 oder über den zweiten Ausgang 9A2 erfolgen, wobei der gewünschte Ausgang mittels einer Stellvorrichtung 9S wählbar ist, wobei der erste Ausgang 9A1 mit dem Windsichter 11 verbunden ist, während der zweite Ausgang 9A2 mit dem Austragsabschnitt 103 verbunden ist.

Auch der zweite 2-Wege-Verteiler 9 funktioniert demnach wie eine Weiche und leitet den Produktstrom, der sich am Eingang 9E einfindet in die eine oder andere Richtung, so dass Produktstrom aus dem durch die Vermahlung mittels der Hammermühle 6 entstandenen Zwischenprodukt entweder direkt dem Austragsabschnitt 103 zugeführt wird oder zuerst auf den Windsichter 11 geleitet wird. Somit kann durch den zweiten 2-Wege-Verteiler 9 die Anlage bzw. das Verfahren je nach Rezeptur und Feinheitsanforderung das Zwischenprodukt direkt dem Austragsabschnitt 103 zuleiten oder zunächst den Windsichter 11 zuführen, so dass durch eine Sichtung mit Hilfe des Windsichters 11 sichergestellt werden kann, dass nur Partikel mit einer bestimmten Feinheit den Austragsabschnitt 103 erreichen, während zu große Partikel erneut den Vermahlungsprozess mit Hilfe der Hammermühle 6 zugeführt werden. Ist jedoch das Vermahlungsspektrum der Hammermühle ausreichend für die gewünschte Feinheit der Partikel, die gemäß Pfeil 104 den Austragsabschnitt 103 verlassen, dann kann auf den Umweg über den Windsichter 11 verzichtet werden und das Produkt direkt dem Auftragsabschnitt 103 zugeführt werden, so dass es in diesem Fall zu einem so genannten Bypass des Sichters 11 kommt.

Der Windsichter 11 weist eine Luftansaugung 10 zum Ansaugen von Außenluft 120 auf, um den Windsichter 11 mit Außenluft 120 zu versorgen. Die Luftansaugung 10 saugt die Außenluft 120 durch ein an der Luftansaugung 10 vorgesehenes Ansauggitter 122 an.

Die Luftansaugung 10 liegt stromaufwärts eines Windsichter-Eingangs 11E für den zu sichtenden Volumenstrom und ist mit diesem Eingang 11E mittels einer pneumatischen Förderleitung 124 verbunden. Die Luftansaugung 10 liegt somit stromaufwärts des Windsichter-Eingangs 11E. Die Förderleitung 124 erhält das Zwischenprodukt von dem ersten Ausgang 9A1 des zweiten 2-Wege-Verteilers 9 über eine Zuführleitung 126. Die Luftansaugung 10 liegt stromaufwärts des Eintrittspunkts 128 der Zuführleitung 126 in die Förderleitung 124. In Bezug auf den ersten Ausgang 9A1 des zweiten 2-Wege-Verteilers 9 liegt der Windsichter 11 somit stromabwärts des zweiten 2-Wege-Verteilers 9, stromabwärts der Hammermühle 6 und auch stromabwärts des ersten 2-Wege-Verteilers 2.

Die Luftansaugung 10 stellt somit die Frischluftansaugung von Außenluft zur Verfügung, die für die Funktion des Windsichters 11 benötigt wird.

Der zweite Ausgang 9A2 des zweiten 2-Wege-Verteilers 9 ist über eine Förderleitung 130 mit einem Eingang 132 des Austragsabschnitts 103 verbunden.

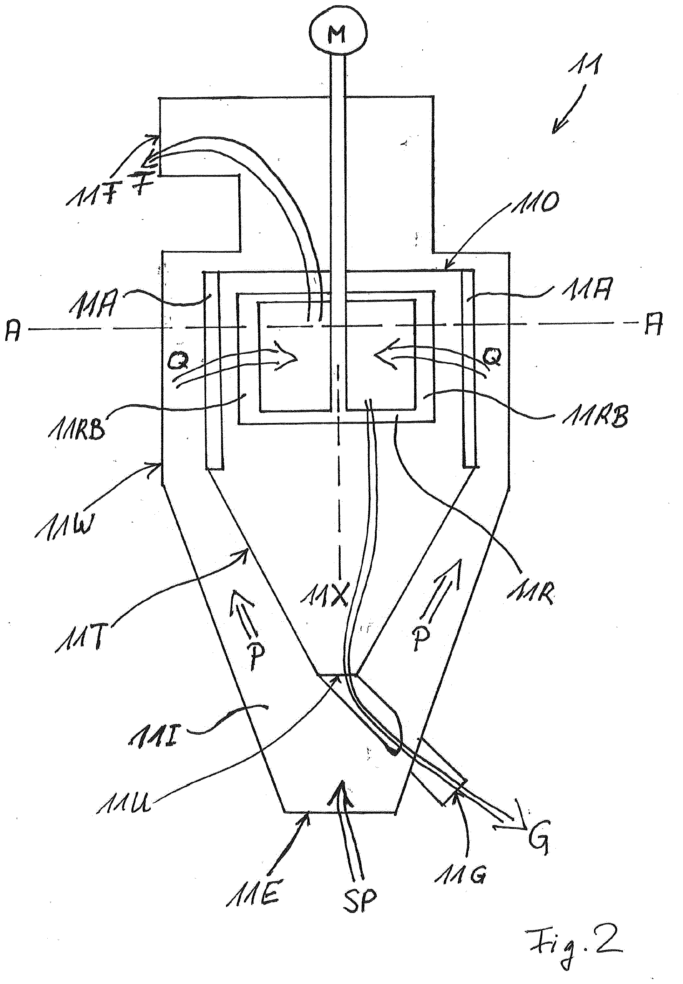

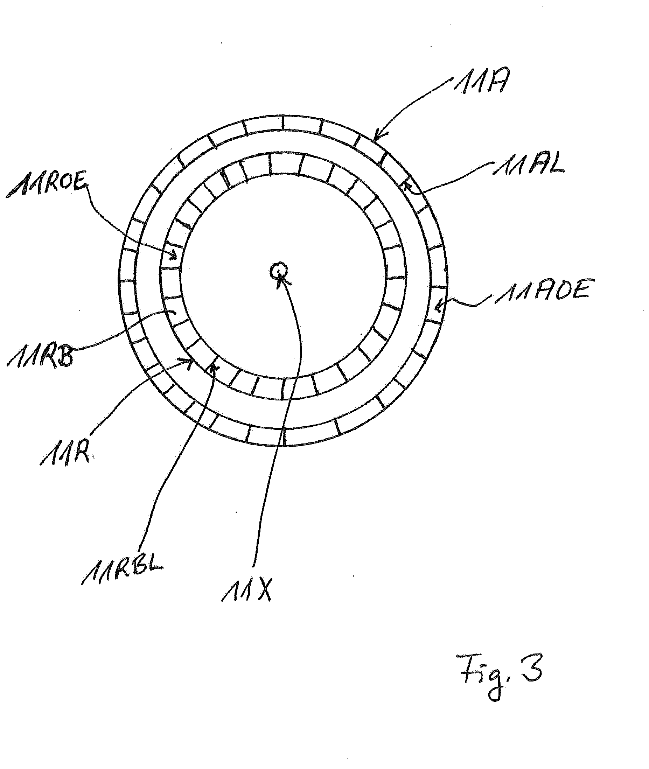

Der in Figur 1 schematisch gezeigte und in Figur 2 größer dargestellte Windsichter 11 weist eine Aussenwand 11W und einen mit Hilfe eines Motors M antreibbares Sichtrad 11R auf. Weiterhin weist der Windsichter 11 ein sich parallel zu einer Rotationsachse 11X des Sichtrads 11R erstreckendes lamellenartiges Gitter 11RB auf. Figur 3 zeigt einen Schnitt entlang der Linie A-A der Figur 2 ohne die Aussenwand 11W des Windsichters 11.

Die Figuren 2 und 3 zeigen die Lamellen 11RBL des Gitters 11RB, die sich parallel zur Rotationsachse 11X erstrecken. Gleichzeitig erstrecken sich die Lamellen 11RBL radial von der Rotationsachse 11X nach aussen. Alternativ können sich die Lamellen auch zur Radialen leicht angewinkelt von der Rotationsachse 11X nach aussen erstrecken. Die Lamellen 11RBL können sich gerade oder gebogen von der Rotationsachse 11X nach aussen erstrecken. Durch den Grad der Anwinkelung gegenüber der Radialen und/oder durch die Form der Lamellen 11RBL läßt sich der Durchmesser der Partikel bestimmen, die durch die Öffnungen 11 ROE zwischen den Lamellen 11RBL hindurchtreten können.

Das Sichtrad 11R mit seinem lamellenartigen Gitter 11RB rotiert innerhalb eines Trichters 11T. An seinen Seiten weist der Trichter 11T in seinem obersten Abschnitt durch parallel zur Rotationsachse 11X verlaufende Lamellen 11AL begrenzte seitliche Öffnungen 11AOE eines Gitters 11A auf. An seiner in den Figuren 1 und 2 oben dargestellten Oberseite 11 O ist der Trichter 11T mit einem Ausgang 11F des Windsichters 11 verbunden. Im Betrieb des Windsichters 11 rotiert das Sichtrad 11R um die Rotationsachse 11X innerhalb des sich starr innerhalb des Windsichters 11 befindenden Trichters 11T.

Durch ein Absaugen von Prozessluft durch den Ausgang 11F gelangt gemäß Pfeil SP ein Volumenstrom von zu sichtendem Produkt aus zu sichtenden Partikeln von unten in den Windsichter 11 über einen Eingang 11E in einen Innenraum 111 des Windsichters 11. Im Luftstrom steigt der Produktvolumenstrom außen an dem Trichter 11T innerhalb des Windsichters 11 gemäß den Pfeilen P nach oben. Der Luftstrom wird gemäß Pfeil Q durch die zwischen den Lamellen 11AL gebildeten Öffnungen des Gitters 11A in das Innere des Trichters 11T und dann durch die zwischen den Lamellen 11RBL gebildeten Öffnungen des rotierenden Gitters 11RB in das Innere des rotierenden Gitters 11RB eingesaugt. Die Rotationsgeschwindigkeit des Sichtrades 11R und die spezifische Bauform des Sichtrades 11R und der Lamellen in den seitlichen Öffnungen des feststehenden Gitters 11A und des rotierenden Gitters 11RB bestimmen, dass Partikel mit einer unterhalb der vorbestimmten Obergrenze liegenden Feinheit gemäß Pfeil F aus dem Ausgang 11F oberhalb des Trichters 11T aus dem Windsichter 11 austreten können, während Partikel, die eine oberhalb der vorbestimmten Obergrenze liegende Feinheit aufweisen, aus einer Öffnung 11U an der Unterseite des Trichters 11T gemäß Pfeil G zu einem Ausgang 11G des Windsichters 11 gelangen und als Grobgut weiter verarbeitet werden können.

Der Ausgang 11G für Grobgut des Windsichters 11 ist mit einer Förderleitung 134 verbunden. Der für eine ausreichende Feinheit aufweisendes Fördergut vorgesehene Ausgang 11F des Windsichters 11 ist mit einer Förderleitung 136 verbunden.

Der Ausgang 11G des Windsichters 11 und somit auch der Windsichter 11 selbst ist stromabwärts des Windsichters 11 über die Förderleitung 134 mit der Hammermühle 6 verbunden, um mittels der Sichtung des Windsichters 11 abgetrennte Partikel mit einer oberhalb der bestimmten Obergrenze liegenden Feinheit, das sogenannte Grobgut, der Hammermühle 6 zuführen zu können. Hierfür ist die mit dem Ausgang 11G des Windsichters 11 verbundene Förderleitung 134 stromabwärts mit einer mittels eines Motors antreibbaren Zellenradschleuse 12 verbunden. Die Zellenradschleuse 12 dient als Barriere zwischen der Sichtung des Windsichters 11 und der Vermahlung der stromabwärts liegenden Hammermühle 6.

Der Windsichter-Ausgang 11F für eine ausreichende Feinheit aufweisendes Produkt ist über die Förderleitung 136 mit dem Eingang 132 des Austragsabschnitts 103 verbunden, sodass von dem Windsichter 11 Partikel mit einer unterhalb der vorbestimmten Obergrenze liegenden Feinheit an den Austragsabschnitt 103 abgebbar sind.

Über den Windsichter-Ausgang 11F sind Partikel mit einer unterhalb der vorbestimmten Obergrenze liegenden Feinheit von dem Windsichter 11 an einen stromabwärts des Ausgangs 11F des Windsichters 11 zwischen Windsichter 11 und Austragsabschnitt 103 vorgesehenen und mit dem Windsichter-Ausgang 11F über die Förderleitung 136 verbundenen Totalabscheider 13 abgebbar. Mit Hilfe des Totalabscheiders 13 sind die den Windsichter 11 zusammen mit einer Transportluft verlassenen Partikel von dieser Transportluft trennbar, um dem Austragsabschnitt 103 die Partikel ohne Transportluft zur Verfügung stellen zu können.

Die Transportluft ist mittels eines mittels eines Motors M angetriebenen Ventilators 14 aus dem Totalabscheider 13 und somit auch aus dem Windsichter 11 absaugbar, um im Windsichter 11 einen gewünschten Luftvolumenstrom zur Verfügung zu stellen.

Stromabwärts des Windsichters 11 und auch stromabwärts des Totalabscheiders 13, jedoch stromaufwärts des Austragsabschnitts 103 bzw. des Eingangs 132 des Austragschnitts 103, ist eine mittels eines Motors M angetriebene und mit dem Windsichter-Ausgang 11F verbundene Austragsschleuse 15 vorgesehen, um ein Ansaugen von Falschluft von stromabwärts der Austragsschleuse 15 nach stromaufwärts der Austragsschleuse 15 zu verhindern. Hierfür ist die Austragsschleuse 15 über eine Förderleitung 138 mit dem Totalabscheider 13 verbunden und über eine Förderleitung 140 stromabwärts mit dem Eingang 132 des Austragsabschnitts 103 verbunden.

Der Ventilator 14 erzeugt die notwendige Prozessluft für die Funktion des Windsichters 11 und sorgt für das richtige Luftvolumen und den richtigen Unterdruck im Windsichter 11, um ein optimales Sichtungsergebnis hinsichtlich der bestimmten Obergrenze zu erzielen. Hierdurch wird eine energieeffiziente, trennscharfe und maximale Sichtungsleistung des Windsichters 11 sichergestellt.

Die Austragsschleuse übergibt das vom Ausgang 11f des Windsichters 11 abgegebene Mahlgut über die Förderleitung 140 dem Eingang 132 des Austragsabschnitts 103 und schließt den pneumatischen Transport aus dem Windsichter 11 gegenüber dem nachfolgenden Prozess innerhalb des Austragsabschnitts 103 ab und verhindert, dass durch den Ventilator 14 Falschluft in den Ausgang 11f bzw. in den Windsichter 11 angesaugt wird. Somit erzeugt die Austragsschleuse 15 insbesondere auch eine kontrollierte Luftmengen- und Luftdrucksituation im Totalabscheider 13, so dass Prozessluft des Windsichters 11 ausschließlich durch den Windsichter 11 selbst durch die Luftansaugung 10 angesaugt wird. Insgesamt wird durch die vorstehend beschriebene Anordnung eine effiziente und funktionierende Abscheidung innerhalb des Windsichters 11 der Partikel mit der unterhalb der bestimmten Obergrenze liegenden Feinheit sichergestellt, während gleichzeitig Energie für die Aspiration von Totalabscheider 13 und Windsichter 11 eingespart wird, da keine Falschluft in den Totalabscheider 13 und den Windsichter 11 eintreten kann.

Der Austragsabschnitt 103 weist einen sowohl mit der Hammermühle 6 als auch mit dem Windsichter 11 verbundenen Hauptmischer 16 auf. Der Hauptmischer 16 ist mittels eines Motors M antreibbar. Mittels des Hauptmischers 16 ist ein stromaufwärts des Hauptmischers 16 entmischtes Zwischenprodukt in ein homogen gemischtes Trockenfutter-Produkt homogenisierbar.

Der Hauptmischer 16 ist in der dargestellten Ausführungsform mit dem Windsichter-Ausgang 11F über die Austragsschleuse 15 und den Totalabscheider 13 verbunden.

Der Hauptmischer 16 gibt das fertige Trockenfutter-Produkt mit der gewünschten, oberhalb der vorbestimmten Obergrenze liegenden Feinheit gemäß Pfeil 104 mit Hilfe einer mittels eines Motors M antreibbaren Austragsförderer 16a ab. In dem dargestellten Ausführungsbeispiel handelt sich bei dem Hauptmischer 16 um einen horizontalen Mischer; es können jedoch auch andere Mischer eine homogene Mischung herstellen. Das Endresultat am Ausgang 104 ist somit ein homogenes Gemisch aus den vermahlenen Rezeptbestandteilen des dem Eingang 102 des Zufuhrabschnitts 102 zugeführten ursprünglichen Rohgemischs.

In der Figur 1 dargestellten Ausführungsform der erfindungsgemäßen Futtermittelverarbeitungsanlage 100 lässt sich mit Hilfe des Stellmotors 2s somit der Windsichter 11 derart zwischen Zufuhrabsschnitt 101 und den Austragsabschnitt 103 in die Anlage 100 einbinden, dass die Gesamtmenge des dem Eingang 102 zugeführten Rohgemischs vor dem Vermahlen durch die Hammermühle 6 dem Windsichter im Rahmen einer Vorsichtung über den zweiten Ausgang 2A2 des ersten 2-Wege-Verteilers 2 zuführbar ist. Bei dieser Stellung des Stellmotors 2S ist der Windsichter 11 somit stromabwärts des Zufuhrabschnitts 101 und stromaufwärts der Hammermühle 6 in die Anlage 100 eingebunden.

Bei einer Stellung der Stellvorrichtung 2S des ersten 2-Wege-Verteilers 2 derart, dass die Stellvorrichtung 2S den ersten Ausgang 2A1 des ersten 2-Wege-Verteilers 2 wählt, ist der Windsichter 11 derart in die Anlage 100 eingebunden, dass die Gesamtmenge des dem Eingang 102 des Zufuhrabschnitt 101 zugeführten Rohgemischs zunächst der Hammermühle 6 zugeführt wird und bei einer Stellung der zweiten Stellvorrichtung 9S des zweiten 2-Wege-Verteilers 9 auf den zweiten Ausgang 9A2 die Gesamtmenge des durch die Vermahlung durch die Hammermühle 6 entstandenen Zwischenprodukts dem somit stromabwärts von der Hammermühle 6 in die Anlage 100 eingebundenen Windsichter 11 zuführbar ist.

In Bezug auf die Partikelgröße ist der Windsichter 11 in der in Figur 1 dargestellten Ausführungsform der Anlage 100 derart in die Anlage 100 eingebunden, dass Partikel mit einer unterhalb der vorbestimmten Obergrenze liegenden Feinheit dem Austragsabschnitt 103 unter Umgehung der Hammermühle 6 mittels eines ersten Windsichter-Ausgangs 11F zuführbar sind, während Partikel mit einer oberhalb der vorbestimmten Obergrenze liegenden Feinheit, das sogenannte Grobgut, der Hammermühle 6 mittels eines zweiten, des Grobgutausgangs 11G des Windsichters 11 der Hammermühle 6 zuführbar sind, wobei somit der erste Windsichter-Ausgang 11F mit dem Austragsabschnitt 103 verbunden ist und der zweite Windsichter-Ausgang 11G für Grobgut mit der Hammermühle 6 verbunden ist.

Eine Ausführungsform eines erfindungsgemäßen Verfahrens zur Herstellung eines Trockenfutter-Produkts aus einem Trockenfutter-Rohgemisch, insbesondere mit Hilfe einer Anlage 100 gemäß Figur 1, arbeitet mit den Schritten: das Rohgemisch wird in einem Zufuhrabschnitt 101 zugeführt, mindestens ein Teil des zugeführten Rohgemischs wird mittels einer mit dem Zufuhrabschnitt 101 verbundenen Hammermühle 6 vermahlen, und das Produkt wird mittels eines mit der Hammermühle 6 verbundenen Austragsabschnitts 103 ausgetragen, wobei Partikel mit einer unterhalb einer vorbestimmten Obergrenze liegenden Feinheit mittels eines zwischen dem Zufuhrabschnitt 101 und dem Austragsabschnitt 103 vorgesehenen Windsichters 11 gesichtet werden, wobei die Feinheit der Partikel einen maximalen Durchmesser der Partikel bedeutet.

Mittels des erfindungsgemäßen Verfahrens kann das dem Eingang 102 des Zufuhrabschnitts 101 zugeführte Rohgemisch im Rahmen einer Vorsichtung vor dem Vermahlen durch die Hammermühle 6 dem Windsichter 11 zugeführt werden.

Unabhängig davon kann nach einer Vermahlung durch die Hammermühle 6 ein durch die Vermahlung entstandenes Zwischenprodukt erstmalig dem Windsichter 11, erneut dem Windsichter 11 oder unter Umgehung des Windsichters 11 direkt dem Austragsabschnitt 103 zugeführt wird.

Bei einer Vorsichtung der Partikel, d.h. bei einer Sichtung der Partikel mit Hilfe des Windsichters 11 vor einer Vermahlung durch die Hammermühle 6, können Partikel mit einer bereits unterhalb der vorbestimmten Obergrenze liegenden Feinheit direkt dem Austragsabschnitt 103 unter Umgehung der Hammermühle 6 mittels eines ersten Windsichter-Ausgangs 11F zugeführt werden, während Partikel mit einer oberhalb der vorbestimmten Obergrenze liegenden Feinheit, das sogenannte Grobgut, der Hammermühle 6 mittels eines zweiten Windsichter-Ausgangs 11G zuführbar sind.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass der Zufuhrabschnitt einen ersten 2-Wege-Verteiler 2 aufweist, wobei der erste 2-Wege-Verteiler 2 einen Eingang 2E, einen ersten mit der Hammermühle 6 verbundenen Ausgang 2A1 und einen zweiten mit dem Windsichter 11 verbundenen Ausgang 2A2 aufweist, wobei dem Eingang 2E Rohgemisch zugeführt wird, wobei mittels einer Stellvorrichtung 2S eine Abgabe des Rohgemischs über den ersten Ausgang 2A1 oder eine Abgabe des Rohgemischs über den zweiten Ausgang 2A2 ausgewählt wird.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass mittels einer motorgetriebenen, stromabwärts des Zufuhrabschnitts 101 und stromaufwärts des Windsichters 11 angeordneten Dosierschleuse (3) ein von dem Zufuhrabschnitt 101 kommender Volumenstrom des Rohgemischs dosiert dem Windsichter 11 zugefördert wird, wobei die Dosierschleuse (3) bevorzugt zugleich eine Entkopplung und/oder einen Übergang von einer von dem Zufuhrabschnitt 101 zu der Dosierschleuse (3) mechanisch erfolgenden Förderung des Volumenstroms des Rohgemischs zu einer von der Dosierschleuse (3) zu dem Windsichter 11 pneumatisch erfolgenden Förderung des Volumenstroms des Rohgemischs vornimmt.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass mittels einer stromabwärts von der Hammermühle 6 angeordneten und mittels eines Motors M angetriebenen Austragsschleuse 8 eine mechanische Förderung eines von der Hammermühle 6 abgegebenen Zwischenprodukts abgeschlossen wird, das Zwischenprodukt an eine weitere Verarbeitung innerhalb der Anlage 100 abgegeben wird und gleichzeitig einen Eintritt von Falschluft in die Hammermühle 6 verhindert wird.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass stromabwärts der Hammermühle 6 und stromaufwärts des Austragsabschnitts 103 ein zweiter 2-Wege-Verteiler 9 vorgesehen ist, wobei der zweite 2-Wege-Verteiler 9 einen mit der Hammermühle verbundenen Eingang 9E, einen mit dem Windsichter 11 verbundenen ersten Ausgang 9A1 und einen mit dem Austragsabschnitt 103 verbundenen zweiten Ausgang 9A2 aufweist, wobei dem Eingang 9E durch die Vermahlung durch die Hammermühle 6 entstandenes Zwischenprodukt zugeführt wird, wobei mittels einer Stellvorrichtung 2S eine Abgabe des Zwischenprodukts über den ersten oder über den zweiten Ausgang 9A1, 9A2 gewählt wird.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass der Windsichter 11 durch eine Luftansaugung 10 zum Ansaugen von Außenluft 120 mit Außenluft 120 versorgt wird, wobei die Luftansaugung 10 bevorzugt stromaufwärts eines Windsichter-Eingangs 11E für den zu sichtenden Volumenstrom, weiter bevorzugt stromaufwärts des ersten Ausgangs 2A1 des zweiten 2-Wege-Verteilers 9 gemäß Anspruch 36 vorgenommen wird. Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass mittels der Sichtung des Windsichters 11 abgetrennte Partikel mit einer oberhalb der bestimmten Obergrenze liegenden Feinheit der Hammermühle 6 zugeführt werden.

Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass mittels einer stromabwärts des Windsichters 11 und stromaufwärts der Hammermühle 6 angeordneten und mittels eines Motors M angetriebenen Zellenradschleuse 12 eine Barriere zwischen der Sichtung des Windsichters 11 und der Vermahlung der Hammermühle 6 geschaffen wird. Das erfindungsgemäße Verfahren, insbesondere das vorstehend beschriebene erfindungsgemäße Verfahren, weiter insbesondere das vorstehend beschriebene erfindungsgemäße Verfahren, welches mit Hilfe einer Anlage 100 der in der Figur 1 dargestellten Ausführungsform arbeitet, kann sich weiter dadurch auszeichnen, dass von dem Windsichter 11 Partikel mit einer unterhalb der vorbestimmten Obergrenze liegenden Feinheit über einen Windsichter-Ausgang 11F an einen Eingang des Austragsabschnitts 103 abgegeben werden.

## Patentansprüche

1. Futtermittelverarbeitungsanlage (100) zur Herstellung eines Trockenfutter-Produkts aus einem Trockenfutter-Rohgemisch,
mit einem Zufuhrabschnitt (101), in dem das Rohgemisch zugeführt wird,
mit einer mit dem Zufuhrabschnitt (101) verbundenen Hammermühle (6) zum Vermahlen mindestens eines Teils des zugeführten Rohgemischs, und
mit einem mit der Hammermühle (6) verbundenen Austragsabschnitt (103), in dem das Produkt ausgetragen wird,
**dadurch gekennzeichnet, dass** zwischen dem Zufuhrabschnitt (101) und dem Austragsabschnitt (103) ein Windsichter (11) zum Sichten von Partikeln mit einer unterhalb einer vorbestimmten Obergrenze liegenden Feinheit vorgesehen ist, wobei die Feinheit der Partikel einen maximalen Durchmesser der Partikel bedeutet, wobei der Windsichter (11) derart zwischen dem Zufuhrabschnitt (101) und dem Austragsabschnitt (103) in die Anlage (100) eingebunden ist, dass das Rohgemisch vor dem Vermahlen durch die Hammermühle (6) dem Windsichter (11) zuführbar ist.

2. Anlage (100) nach Anspruch 1,
wobei der Windsichter (11) derart zwischen dem Zufuhrabschnitt (101) und dem Austragsabschnitt (103) in die Anlage (100) eingebunden ist, dass je nach Anforderung bzw. Feinheitsgehalt in der Vormischung das Rohgemisch vor dem Vermahlen durch die Hammermühle (6) dem Windsichter (11) zuführbar ist.

3. Anlage (100) nach Anspruch 2,
wobei der Windsichter (11) zwischen dem Zufuhrabschnitt (101) und dem Austragsabschnitt (103) in die Anlage (100) dadurch eingebunden ist, dass der Windsichter (11) stromabwärts des Zufuhrabschnitts (101) und stromaufwärts der Hammermühle (6) in die Anlage (100) eingebunden ist.

4. Anlage (100) nach einem der vorstehenden Ansprüche,
wobei der Windsichter (11) derart in die Anlage (100) eingebunden ist, dass Partikel mit einer unterhalb der vorbestimmten Obergrenze liegenden Feinheit dem Austragsabschnitt (103) unter Umgehung der Hammermühle (6) mittels eines ersten Windsichter-Ausgangs (11F) zuführbar sind, während Partikel mit einer oberhalb der vorbestimmten Obergrenze liegenden Feinheit der Hammermühle (6) mittels eines zweiten Windsichter-Ausgangs (11G) zuführbar sind, wobei der erste Windsichter-Ausgang (11F) mit dem Austragsabschnitt (103) verbunden ist und der zweite Windsichter-Ausgang (11G) mit der Hammermühle (6) verbunden ist.

5. Anlage (100) nach einem der vorstehenden Ansprüche,
wobei der Zufuhrabschnitt (101) einen ersten 2-Wege-Verteiler (2) aufweist, wobei der erste 2-Wege-Verteiler (2) einen ersten Eingang (2E), einen ersten Ausgang (2A1) und einen
zweiten Ausgang (2A2) aufweist, wobei dem ersten Eingang (2E) Rohgemisch zuführbar ist, wobei mittels einer Stellvorrichtung (2S) eine Abgabe des Rohgemischs aus dem ersten 2-Wege-Verteiler (2) über den ersten Ausgang (2A1) oder eine Abgabe des Rohgemischs aus dem ersten 2-Wege-Verteiler (2) über den zweiten Ausgang (2A2) auswählbar ist, wobei der erste Ausgang (2A1) mit der Hammermühle (6) verbunden ist und der zweite Ausgang (2A2) mit dem Windsichter (11) verbunden ist.

6. Anlage (100) nach einem der vorstehenden Ansprüche,
wobei stromabwärts der Hammermühle (6) und stromaufwärts des Austragsabschnitts (103) ein zweiter 2-Wege-Verteiler (9) vorgesehen ist, wobei der zweite 2-Wege-Verteiler (9) einen zweiten Eingang (9E), einen dritten Ausgang (9A1) und einen vierten Ausgang (9A2) aufweist, wobei der Eingang (9E) mit der Hammermühle (6) verbunden ist und dem zweiten Eingang (9E) durch die Vermahlung durch die Hammermühle (6) entstandenes Zwischenprodukt zuführbar ist, wobei eine Abgabe des Zwischenprodukts aus dem zweiten 2-Wege-Verteiler (9) über den dritten oder über den vierten Ausgang (9A1, 9A2) erfolgen kann,
wobei der gewünschte Ausgang (9A1, 9A2) mittels einer Stellvorrichtung (2S) wählbar ist, wobei der dritte Ausgang (9A1) mit dem Windsichter (11) verbunden ist, während der vierte Ausgang (9A2) mit dem Austragsabschnitt (103) verbunden ist.

7. Anlage (100) nach einem der vorstehenden Ansprüche,
wobei der Windsichter (11) eine Luftansaugung (10) zum Ansaugen von Außenluft (120) aufweist, um den Windsichter (11) mit Außenluft (120) zu versorgen.

8. Anlage (100) nach Anspruch 7,
wobei die Luftansaugung (10) stromaufwärts eines Windsichter-Eingangs (11E) für den zu sichtenden Volumenstrom in die Anlage (100) eingebunden ist.

9. Anlage (100) nach Anspruch 5,
wobei der Windsichter (11) stromabwärts des ersten 2-Wege-Verteilers (2) angeordnet ist.

10. Anlage (100) nach einem der vorstehenden Ansprüche,
wobei ein Windsichter-Ausgang (11F) mit einem Eingang (132) des Austragsabschnitts (103) verbunden ist, sodass von dem Windsichter (11) Partikel mit einer unterhalb der vorbestimmten Obergrenze liegenden Feinheit an den Austragsabschnitt (103) abgebbar sind.

11. Anlage (100) nach dem vorstehenden Anspruch,
wobei über einen Windsichter-Ausgang (11F) Partikel mit einer unterhalb der vorbestimmten Obergrenze liegenden Feinheit von dem Windsichter (11) an einen stromabwärts des Ausgangs (11F) des Windsichters (11) zwischen Windsichter (11) und Austragsabschnitt (103) vorgesehenen und mit dem Windsichter-Ausgang (11F) verbundenen Totalabscheider (13) abgebbar sind, wobei mittels des Totalabscheiders (13) die den Windsichter (11) zusammen mit der Transportluft verlassenen Partikel von dieser Transportluft trennbar sind, um dem Austragsabschnitt (103) die Partikel ohne Transportluft zur Verfügung zu stellen.

12. Verfahren zur Herstellung eines Trockenfutter-Produkts aus einem Trockenfutter-Rohgemisch, insbesondere mit Hilfe einer Anlage (100) nach einem der vorstehenden Ansprüche, mit den Schritten:
das Rohgemisch wird in einem Zufuhrabschnitt (101) zugeführt,
mindestens ein Teil des zugeführten Rohgemischs wird mittels einer mit dem Zufuhrabschnitt (101) verbundenen Hammermühle (6) vermahlen, und
das Produkt wird mittels eines mit der Hammermühle (6) verbundenen Austragsabschnitts (103) ausgetragen,
**dadurch gekennzeichnet, dass** Partikel mit einer unterhalb einer vorbestimmten Obergrenze liegenden Feinheit mittels eines zwischen dem Zufuhrabschnitt (101) und dem Austragsabschnitt (103) vorgesehenen Windsichters (11) gesichtet werden, wobei die Feinheit der Partikel einen maximalen Durchmesser der Partikel bedeutet,
wobei Partikel mit einer unterhalb der vorbestimmten Obergrenze liegenden Feinheit dem Austragsabschnitt (103) unter Umgehung der Hammermühle (6) mittels eines ersten Windsichter-Ausgangs (11F) zugeführt werden, während Partikel mit einer oberhalb der vorbestimmten Obergrenze liegenden Feinheit der Hammermühle (6) mittels eines zweiten Windsichter-Ausgangs (11G) zugeführt werden.

13. Verfahren nach Anspruch 12,
wobei der Zufuhrabschnitt (101) einen ersten 2-Wege-Verteiler (2) aufweist, wobei der erste 2-Wege-Verteiler (2) einen ersten Eingang (2E), einen ersten mit der Hammermühle (6) verbundenen Ausgang (2A1) und einen zweiten mit dem Windsichter (11) verbundenen Ausgang (2A) aufweist, wobei dem ersten Eingang (2E) Rohgemisch zugeführt wird, wobei mittels einer Stellvorrichtung (2S) eine Abgabe des Rohgemischs über den ersten Ausgang (2A1) oder eine Abgabe des Rohgemischs über den zweiten Ausgang (2A2) ausgewählt wird.

14. Verfahren nach einem der vorstehenden Ansprüche 12-13, wobei stromabwärts der Hammermühle (6) und stromaufwärts des Austragsabschnitts (103) ein zweiter 2-Wege-Verteiler (9) vorgesehen ist, wobei der zweite 2-Wege-Verteiler (9) einen mit der Hammermühle (6) verbundenen zweiten Eingang (9E), einen mit dem Windsichter (11) verbundenen dritten Ausgang (9A1) und einen mit dem Austragsabschnitt (103) verbundenen vierten Ausgang (9A2) aufweist, wobei dem zweiten Eingang (9E) durch die Vermahlung durch die Hammermühle (6) entstandenes Zwischenprodukt zugeführt wird, wobei mittels einer Stellvorrichtung (2S) eine Abgabe des Zwischenprodukts über den dritten oder über den vierten Ausgang (9A1, 9A2) gewählt wird.

15. Verfahren nach einem der vorstehenden Ansprüche 12-14,
wobei der Windsichter (11) durch eine Luftansaugung (10) zum Ansaugen von Außenluft (120) mit Außenluft (120) versorgt wird.

## Claims

1. Feed processing machine (100) for the production of a dry feed product from a dry feed raw mixture,
with a feed section (101) in which the raw mixture is fed,
with a hammer mill (6) connected to the feed section (101) for grinding at least a part of the raw mixture supplied, and
with a discharge section (103) connected to the hammer mill (6), in which the product is discharged,
**characterised in that** a windsifter (11) is provided between the feed section (101) and the discharge section (103) for classifying particles with a fineness below a predetermined upper limit, the fineness of the particles meaning a maximum diameter of the particles, wherein the windsifter (11) is incorporated in the machine (100) between the feed section (101) and the discharge section (103) in such a way that the raw mixture can be fed to the windsifter (11) before grinding by the hammer mill (6).

2. Machine (100) according to claim 1,
wherein the windsifter (11) is integrated into the machine (100) between the feed section (101) and the discharge section (103) in such a way that, depending on the requirement or fineness content in the premix, the raw mixture can be fed to the windsifter (11) before grinding by the hammer mill (6).

3. Machine (100) according to claim 2,
wherein the windsifter (11) is integrated into the machine (100) between the feed section (101) and the discharge section (103) in that the windsifter (11) is integrated into the machine (100) downstream of the feed section (101) and upstream of the hammer mill (6).

4. Machine (100) according to one of the preceding claims,
wherein the windsifter (11) is integrated into the machine (100) in such a way that particles with a fineness below the predetermined upper limit can be fed to the discharge section (103) by bypassing the hammer mill (6) by means of a first windsifter outlet (11F), while particles with a fineness above the predetermined upper limit can be fed to the hammer mill (6) by means of a second windsifter outlet (11G), wherein the first windsifter outlet (11F) is connected to the discharge section (103) and the second windsifter outlet (11G) is connected to the hammer mill (6).

5. Machine (100) according to one of the preceding claims,
wherein the feed section (101) has a first 2-way distributor (2), wherein the first 2-way distributor (2) has a first inlet (2E), a first outlet (2A1) and a second outlet (2A2), wherein raw mixture can be fed to the first inlet (2E), wherein a delivery of the raw mixture from the first 2-way distributor (2) via the first output (2A1) or a delivery of the raw mixture from the first 2-way distributor (2) via the second output (2A2) can be selected by means of an adjusting device (2S), wherein the first output (2A1) is connected to the hammer mill (6) and the second output (2A2) is connected to the windsifter (11).

6. Machine (100) according to one of the preceding claims,
wherein a second 2-way distributor (9) is provided downstream of the hammer mill (6) and upstream of the discharge section (103), wherein the second 2-way distributor (9) has a second input (9E), a third output (9A1) and a fourth output (9A2), wherein the input (9E) is connected to the hammer mill (6) and the intermediate product produced by the grinding by the hammer mill (6) can be fed to the second input (9E), wherein the intermediate product can be discharged from the second 2-way distributor (9) via the third or via the fourth output (9A1, 9A2), wherein the desired output (9A1, 9A2) can be selected by means of an adjusting device (2S), wherein the third output (9A1) is connected to the windsifter (11), while the fourth output (9A2) is connected to the discharge section (103).

7. Machine (100) according to one of the preceding claims,
wherein the windsifter (11) has an air intake (10) for drawing in outside air (120) in order to supply the windsifter (11) with outside air (120).

8. Machine (100) according to claim 7,
wherein the air intake (10) is integrated into the machine (100) upstream of a windsifter inlet (11E) for the volume flow to be classified.

9. Machine (100) according to claim 5,
wherein the windsifter (11) is arranged downstream of the first 2-way distributor (2).

10. Machine (100) according to one of the preceding claims,
wherein a windsifter output (11F) is connected to an input (132) of the discharge section (103), so that particles with a fineness below the predetermined upper limit can be discharged from the windsifter (11) to the discharge section (103).

11. Machine (100) according to the above claim,
wherein particles with a fineness below the predetermined upper limit can be discharged from the windsifter (11) via a windsifter outlet (11F) to a total separator (13) provided downstream of the outlet (11F) of the windsifter (11) between the windsifter (11) and the discharge section (103) and connected to the windsifter outlet (11F), wherein the particles leaving the windsifter (11) together with the transport air can be separated from this transport air by means of the total separator (13) in order to make the particles available to the discharge section (103) without transport air.

12. Method for producing a dry feed product from a dry feed raw mixture, in particular with the aid of a machine (100) according to one of the preceding claims, comprising the steps of:
the raw mixture is fed into a feed section (101),
at least part of the raw mixture supplied is ground by means of a hammer mill (6) connected to the feed section (101), and
the product is discharged by means of a discharge section (103) connected to the hammer mill (6),
**characterised in that** particles having a fineness below a predetermined upper limit are sifted by means of a windsifter (11) provided between the feed section (101) and the discharge section (103), the fineness of the particles meaning a maximum diameter of the particles,
wherein particles with a fineness below the predetermined upper limit are fed to the discharge section (103) by bypassing the hammer mill (6) by means of a first windsifter outlet (11F), while particles with a fineness above the predetermined upper limit are fed to the hammer mill (6) by means of a second windsifter outlet (11G).

13. Method according to claim 12,
wherein the feed section (101) has a first 2-way distributor (2), wherein the first 2-way distributor (2) has a first inlet (2E), a first outlet (2A1) connected to the hammer mill (6) and a second outlet (2A) connected to the windsifter (11), wherein raw mixture is supplied to the first input (2E), wherein a discharge of the raw mixture via the first output (2A1) or a discharge of the raw mixture via the second output (2A2) is selected by means of an adjusting device (2S).

14. Method according to any one of the preceding claims 12-13,
wherein a second 2-way distributor (9) is provided downstream of the hammer mill (6) and upstream of the discharge section (103), wherein the second 2-way distributor (9) has a second inlet (9E) connected to the hammer mill (6), a third outlet (9A1) connected to the windsifter (11) and a fourth outlet (9A2) connected to the discharge section (103), wherein the intermediate product produced by the grinding by the hammer mill (6) is fed to the second input (9E), wherein a discharge of the intermediate product via the third or via the fourth output (9A1, 9A2) is selected by means of an adjusting device (2S).

15. Method according to any one of the preceding claims 12-14,
wherein the windsifter (11) is supplied with outside air (120) by an air intake (10) for drawing in outside air (120).

## Revendications

1. Installation de traitement de fourrage (100) destinée à fabriquer un produit de fourrage sec à partir d'un mélange brut de fourrages secs,
avec une section d'amenée (101), dans laquelle le mélange brut est amené,
avec un broyeur à marteaux (6) relié à la section d'amenée (101) destiné à broyer au moins une partie du mélange brut amené, et
avec une section d'évacuation (103) reliée au broyeur à marteaux (6), dans laquelle le produit est évacué,
**caractérisée en ce qu'**est prévu entre la section d'amenée (101) et la section d'évacuation (103) un séparateur à air (11) destiné à séparer des particules avec une finesse inférieure à une limite supérieure prédéfinie, dans laquelle la finesse des particules signifie un diamètre maximal des particules, dans laquelle le séparateur à air (11) est intégré dans l'installation (100) entre la section d'amenée (101) et la section d'évacuation (103) de telle manière que le mélange brut peut être amené au séparateur à air (11) par le broyeur à marteaux (6) avant le broyage.

2. Installation (100) selon la revendication 1,
dans laquelle le séparateur à air (11) est intégré de telle manière dans l'installation (100) entre la section d'amenée (101) et la section d'évacuation (103) que selon la demande ou la teneur de finesse dans le prémélange, le mélange brut peut être amené au séparateur à air (11) par le broyeur à marteaux (6) avant le broyage.

3. Installation (100) selon la revendication 2,
dans laquelle le séparateur à air (11) est intégré dans l'installation (100) entre la section d'amenée (101) et la section d'évacuation (103) en ce que le séparateur à air (11) est intégré dans l'installation (100) en aval de la section d'amenée (101) et en amont du broyeur à marteaux (6).

4. Installation (100) selon l'une quelconque des revendications précédentes,
dans laquelle le séparateur à air (11) est intégré dans l'installation (100) de telle manière que des particules avec une finesse inférieure à une limite supérieure prédéfinie peuvent être amenées à la section d'évacuation (103) en contournant le broyeur à marteaux (6) au moyen d'une première sortie de séparateur à air (11F), tandis que des particules avec une finesse supérieure à la limite supérieure prédéfinie peuvent être amenées au broyeur à marteaux (6) au moyen d'une deuxième sortie de séparateur à air (11G), dans laquelle la première sortie de séparateur à air (11F) est reliée à la section d'évacuation (103) et la deuxième sortie de séparateur à air (11G) est reliée au broyeur à marteaux (6).

5. Installation (100) selon l'une quelconque des revendications précédentes,
dans laquelle la section d'amenée (101) présente un premier distributeur à deux voies (2), dans laquelle le premier distributeur à deux voies (2) présente une première entrée (2E), une première sortie (2A1) et une deuxième sortie (2A2), dans laquelle du mélange brut peut être amené à la première entrée (2E), dans laquelle une distribution du mélange brut provenant du premier distributeur à deux voies (2) par l'intermédiaire de la première sortie (2A1) ou une distribution du mélange brut provenant du premier distributeur à deux voies (2) par l'intermédiaire de la deuxième sortie (2A2) peut être choisie au moyen d'un dispositif de réglage (2S), dans laquelle la première sortie (2A1) est reliée au broyeur à marteaux (6) et la deuxième sortie (2A2) est reliée au séparateur à air (11).

6. Installation (100) selon l'une quelconque des revendications précédentes,
dans laquelle un deuxième distributeur à deux voies (9) est prévu en aval du broyeur à marteaux (6) et en amont de la section d'évacuation (103), dans laquelle le deuxième distributeur à deux voies (9) présente une deuxième entrée (9E), une troisième sortie (9A1) et une quatrième sortie (9A2), dans laquelle l'entrée (9E) est reliée au broyeur à marteaux (6) et un produit intermédiaire obtenu par broyage par le broyeur à marteaux (6) peut être amené à la deuxième entrée (9E), dans laquelle une distribution du produit intermédiaire provenant du deuxième distributeur à deux voies (9) peut être effectuée par l'intermédiaire de la troisième ou par l'intermédiaire de la quatrième sortie (9A1, 9A2),
dans laquelle la sortie souhaitée (9A1, 9A2) peut être choisie au moyen d'un dispositif de réglage (2S),
dans laquelle la troisième sortie (9A1) est reliée au séparateur à air (11), tandis que la quatrième sortie (9A2) est reliée à la section d'évacuation (103).

7. Installation (100) selon l'une quelconque des revendications précédentes,
dans laquelle le séparateur à air (11) présente une aspiration d'air (10) destinée à aspirer de l'air extérieur (120) pour alimenter le séparateur à air (11) en air extérieur (120).

8. Installation (100) selon la revendication 7,
dans laquelle l'aspiration d'air (10) est intégrée dans l'installation (100) en amont d'une entrée de séparateur à air (11E) pour le flux volumique à séparer.

9. Installation (100) selon la revendication 5,
dans laquelle le séparateur à air (11) est disposé en aval du premier distributeur à deux voies (2).

10. Installation (100) selon l'une quelconque des revendications précédentes,
dans laquelle une sortie de séparateur à air (11F) est reliée à une entrée (132) de la section d'évacuation (103) si bien que des particules avec une finesse inférieure à la limite supérieure prédéfinie peuvent être distribuées à la section d'évacuation (103) par le séparateur à air (11).

11. Installation (100) selon la revendication précédente,
dans laquelle des particules avec une finesse inférieure à la limite supérieure prédéfinie peuvent être distribuées par le séparateur à air (11) à un séparateur total (13) prévu entre le séparateur à air (11) et la section d'évacuation (103) en aval de la sortie (11F) du séparateur à air (11) et relié à la sortie de séparateur à air (11F) par l'intermédiaire d'une sortie de séparateur à air (11F), dans laquelle les particules ayant quitté le séparateur à air (11) conjointement avec l'air de transport peuvent être séparées dudit air de transport au moyen du séparateur total (13) pour mettre à la disposition de la section d'évacuation (103) les particules sans air de transport.

12. Procédé de fabrication d'un produit de fourrage sec à partir d'un mélange brut de fourrages secs, en particulier à l'aide d'une installation (100) selon l'une quelconque des revendications précédentes, avec les étapes :
le mélange brut est amené dans une section d'amenée (101),
au moins une partie du mélange brut amené est broyée au moyen d'un broyeur à marteaux (6) relié à la section d'amenée (101), et
le produit est évacué au moyen d'une section d'évacuation (103) reliée au broyeur à marteaux (6),
**caractérisé en ce que** des particules avec une finesse inférieure à une limite supérieure prédéfinie sont séparées au moyen d'un séparateur à air (11) prévu entre la section d'amenée (101) et la section d'évacuation (103), dans lequel la finesse des particules signifie un diamètre maximal des particules,
dans lequel des particules avec une finesse inférieure à la limite supérieure prédéfinie sont amenées à la section d'évacuation (103) en contournant le broyeur à marteaux (6) au moyen d'une première sortie de séparateur à air (11F) tandis que des particules avec une finesse supérieure à la limite supérieure prédéfinie sont amenées au broyeur à marteaux (6) au moyen d'une deuxième sortie de séparateur à air (11G).

13. Procédé selon la revendication 12,
dans lequel la section d'amenée (101) présente un premier distributeur à deux voies (2), dans lequel le premier distributeur à deux voies (2) présente une première entrée (2E), une première sortie (2A1) reliée au broyeur à marteaux (6), une deuxième sortie (2A) reliée au séparateur à air (11), dans lequel du mélange brut est amené à la première entrée (2E), dans lequel une distribution du mélange brut par l'intermédiaire de la première sortie (2A1) ou une distribution du mélange brut par l'intermédiaire de la deuxième sortie (2A2) peut être choisie au moyen d'un dispositif de réglage (2S).

14. Procédé selon l'une quelconque des revendications 12 - 13,
dans lequel un deuxième distributeur à deux voies (9) est prévu en aval du broyeur à marteaux (6) et en amont de la section d'évacuation (103), dans lequel le deuxième distributeur à deux voies (9) présente une deuxième entrée (9E) reliée au broyeur à marteaux (6), une troisième sortie (9A1) reliée au séparateur à air (11) et une quatrième sortie (9A2) reliée à la section d'évacuation (103), dans lequel du produit intermédiaire obtenu par broyage par le broyeur à marteaux (6) est amené à la deuxième entrée (9E), dans lequel une distribution du produit intermédiaire par l'intermédiaire de la troisième ou par l'intermédiaire de la quatrième sortie (9A1, 9A2) est choisie au moyen d'un dispositif de commande (2S).

15. Procédé selon l'une quelconque des revendications 12 - 14,
dans lequel le séparateur à air (11) est alimenté en air extérieur (120) par une aspiration d'air (10) destinée à aspirer de l'air extérieur (120).
